# EUROPEAN PATENT SPECIFICATION

(11) **EP 3 605 966 B1**
(45) Date of publication and mention of the grant of the patent: **27.01.2021**
(21) Application number: 18824636.7
(22) Date of filing: 25.06.2018
(51) Int. Cl.: H04L 29/06, H04L 12/28, H04L 29/08, H04L 12/70, G05B 15/02, G06F 21/55, G08B 25/04, H04Q 9/00

(54) **INTRUSION DETECTION DEVICE, INTRUSION DETECTION METHOD, AND INTRUSION DETECTION SYSTEM**
VORRICHTUNG ZUM EINDRINGUNGSERKENNUNG, VERFAHREN ZUM EINDRINGUNGSERKENNUNG UND SYSTEM ZUM EINDRINGUNGSERKENNUNG
DISPOSITIF, PROCÉDÉ ET SYSTÈME DE DÉTECTION D'INTRUSION

(30) Priority: 27.06.2017 WO PCT/JP2017/023573
(43) Date of publication of application: 05.02.2020
(73) Proprietor: Mitsubishi Electric Corporation, Tokyo 100-8310 (JP)
(72) Inventor: NAKAJIMA, Yoshinori, Tokyo 100-0006 (JP); MIWA, Takehisa, Tokyo 100-0006 (JP); HIGUCHI, Masaki, Tokyo 100-0006 (JP); YAMAGUCHI, Teruyoshi, Tokyo 100-8310 (JP); NAKAI, Tsunato, Tokyo 100-8310 (JP); KAWASAKI, Jin, Tokyo 100-8310 (JP)
(74) Representative: Mewburn Ellis LLP
(86) International application number: PCT/JP2018/023933
(87) International publication number: WO 2019/004101

(56) References cited:
- WO-A1-2014/155650
- WO-A1-2016/194123
- JP-A- 2004 304 752
- JP-A- 2007 164 313
- JP-A- 2012 034 273
- US-A1- 2009 271 504
- MARCO CASELLI UNIVERSITY OF TWENTE M CASELLI@UTWENTE NL UNIVERSITY OF TWENTE & SECURITYMATTERS B V EMMANUELE ZAMBON@SECMATTERS COM: "Specification Mining for Intrusion Detection in Networked Control Systems", USENIX, USENIX, THE ADVANCED COMPUTING SYSTEMS ASSOCIATION , 6 January 2017 (2017-01-06), pages 802-817, XP061025120, Retrieved from the Internet: URL:https://www.usenix.org/sites/default/f iles/sec16_full_proceedings_interior.pdf [retrieved on 2017-01-06]
- Nakai, Tsunato et al: "Design of whitelisting intrusion detection method for plant control system", SCIS 2016 (2016 Symposium on Cryptography and Information Security), 19 January 2016 (2016-01-19), - 22 January 2016 (2016-01-22), pages 1-8, XP009517222,

## Description

### TECHNICAL FIELD

The present disclosure relates to an intrusion detection device, an intrusion detection method, and an intrusion detection system that detect intrusion into a network.

### BACKGROUND

In recent years, there have been an increasing number of incidences where, an industrial control system such as a control system of a building facility is targeted for cyberattacks. As a countermeasure, there is used a method to detect intrusion in which, taking advantage of the fact that a network communication of the industrial control system is fixed, a permitted communication is defined such as a pair of a destination address and a sender address, and a protocol; the permitted communications are gathered as a communication permission list; and a communication which is not in the communication permission list is detected (for example, refer to Patent Documents 1 and 2).

### CITATION LIST

### PATENT LITERATURE

Patent Document 1: JP 2016-163352 A
Patent Document 2: JP 6054010 B
Patent Document 3: WO 2016/194123 A discloses Relay device, network monitoring system, and program
Patent Document 4: JP 2007 164313 A discloses Illegal access detection device

### NON PATENT LITERATURE

M. Caselli, E. Zambon, J. Amann, R. Sommer, and F. Kargl, "Specification Mining for Intrusion Detection in Networked Control Systems", Proceedings of the 25th USENIX Security Symposium (2016).

### SUMMARY

In the related art described in Patent Documents 1 and 2, as the communication permission list, there is used a list in which communication data collected from the network are learned and analyzed. However, when the list is to be generated by such a learning method, there have been problems in that time required for the learning is long, and that it is difficult to confirm whether or not the learning is sufficient and the list is accurate.

An advantage of the present disclosure lies in provision of an intrusion detection device which can easily generate a communication permission list.

According to one aspect of the present disclosure, there is provided an intrusion detection device as set forth in claim 1.

According to another aspect of the present disclosure, there is provided an intrusion detection method as set forth in claim 7.

According to another aspect of the present disclosure, there is provided an intrusion detection system as set forth in claim 11.

According to the present disclosure, an intrusion detection device which can easily produce a communication permission list can be provided.

### BRIEF DESCRIPTION OF DRAWINGS

FIG. 1 is a system diagram showing a structure of a building management system to which an intrusion detection device according to an embodiment of the present disclosure is applied.
FIG. 2 is a functional block diagram showing a structure of an intrusion detection device according to an embodiment of the present disclosure.
FIG. 3 is a hardware structure diagram of a computer forming the intrusion detection device of FIG. 2.
FIG. 4 is a diagram showing a structure of engineering data stored in an engineering information file shown in FIG. 2.
FIG. 5 is a diagram showing a structure of intermediate data which is output by an attribute information analyzer shown in FIG. 2.
FIG. 6 is a diagram showing a structure of a communication permission list which is output by a communication permission list generator shown in FIG. 2.
FIG. 7 is a flowchart showing a basic operation of the intrusion detection device shown in FIG. 2.
FIG. 8 is a flowchart showing a communication permission list generation operation of the intrusion detection device shown in FIG. 2.
FIG. 9 is a functional block diagram showing a structure of an intrusion detection device according to another embodiment of the present disclosure.
FIG. 10 is a functional block diagram showing a structure of an intrusion detection device according to another embodiment of the present disclosure.
FIG. 11 is a diagram showing a structure of a communication rule list which is generated by a communication rule list generator shown in FIG. 10.
FIG. 12 is a flowchart showing a corrected communication permission list generation operation of the intrusion detection device shown in FIG. 10.
FIG. 13 is a flowchart showing a basic operation of the intrusion detection device shown in FIG. 10.
FIG. 14 is a system diagram showing a management system of a building facility to which an intrusion detection system according to an embodiment of the present disclosure is applied.
FIG. 15 is a functional block diagram of an intrusion detection system according to an embodiment of the present disclosure.
FIG. 16 is a flowchart showing a communication permission list generation operation in the intrusion detection system shown in FIG. 15.
FIG. 17 is a diagram showing a data structure of acquired engineering data in the communication permission list generation operation shown in FIG. 16, and a data structure of intermediate data generated from the engineering data.
FIG. 18 is a diagram showing a data structure of intermediate data and a data structure of an intermediate communication permission list generated from the intermediate data in the communication permission list generation operation shown in FIG. 16.
FIG. 19 is a diagram showing a data structure of an intermediate communication permission list and a data structure of a communication permission list generated from the intermediate communication permission list in the communication permission list generation operation shown in FIG. 16.
FIG. 20 is a flowchart showing an intrusion detection operation in an intrusion detection system according to an embodiment of the present disclosure.
FIG. 21 is a diagram showing a data structure of acquired communication data and a data structure of communication determination data generated from the communication data in an intrusion detection operation shown in FIG. 20.
FIG. 22 is a diagram showing comparison between communication determination data and communication permission data in the intrusion detection operation shown in FIG. 20.
FIG. 23 is a diagram showing a data structure of an alert issued by an alert unit in the intrusion detection operation shown in FIG. 20.
FIG. 24 is a flowchart showing another communication permission list generation operation in an intrusion detection system according to an embodiment of the present disclosure.
FIG. 25 is a diagram showing a data structure of a communication permission list generated based on an intermediate communication permission list and time-stamped communication data in a communication permission list generation operation shown in FIG. 24.
FIG. 26 is a flowchart showing another intrusion detection operation in an intrusion detection system according to an embodiment of the present disclosure.
FIG. 27 is a diagram showing a comparison of communication determination data generated based on time-stamped communication data and a communication permission list in the intrusion detection operation shown in FIG. 26.
FIG. 28 is a diagram showing a data structure of an alert issued by an alert unit in the intrusion detection operation shown in FIG. 26.
FIG. 29 is a system diagram showing a management system of a building facility to which an intrusion detection system according to another embodiment of the present disclosure is applied.
FIG. 30 is a functional block diagram of an intrusion detection system according to another embodiment of the present disclosure.
FIG. 31 is a flowchart showing an update operation of a communication permission list in the intrusion detection system shown in FIG. 30.
FIG. 32 is a diagram showing a comparison of an alert and an intermediate communication permission list, and a data structure of an updated communication permission list in the update operation of the communication permission list shown in FIG. 31.
FIG. 33 is a flowchart showing another update operation of the communication permission list in the intrusion detection system shown in FIG. 30.
FIG. 34 is a diagram showing a data structure of an alert, a communication permission list, and an updated communication permission list in the other update operation shown in FIG. 31.

### DESCRIPTION OF EMBODIMENTS

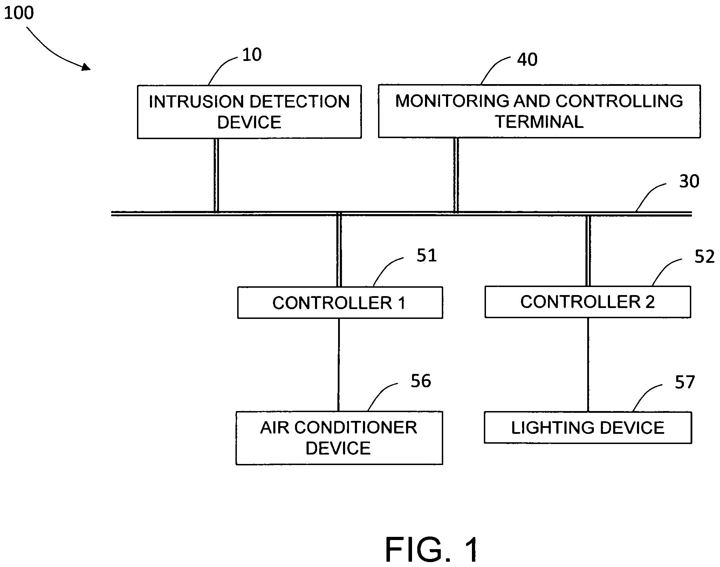

An intrusion detection device 10 according to an embodiment of the present disclosure will now be described with reference to the drawings. First, with reference to FIG. 1, a structure of a building management system 100 to which the intrusion detection device 10 of the present embodiment is applied will be described. The building management system 100 includes controllers 51 and 52 to which an air conditioner device 56 and a lighting device 57, which are building facilities, are respectively connected, a monitoring and controlling terminal 40, a network 30 which connects the controllers 51 and 52 and the monitoring and controlling terminal 40, and the intrusion detection device 10 connected to the network 30.

The monitoring and controlling terminal 40 monitors and controls the controllers 51 and 52 by communication via the network 30, and is a device, for example, which is used by an operator when the operator sends instructions to the controllers 51 and 52. The controllers 51 and 52 respectively control the air conditioner device 56 and the lighting device 57 which are building facilities, based on a control instruction from the monitoring and controlling terminal 40. The air conditioner device 56 and the lighting device 57 execute predetermined operations based on the instructions of the controllers 51 and 52. For the communication between the monitoring and controlling terminal 40 and the controllers 51 and 52 which are connected by the network 30, BACnet (Building Automation and Control networking protocol) is used. The intrusion detection device 10 executes intrusion detection by cyberattack in the communication in the network 30.

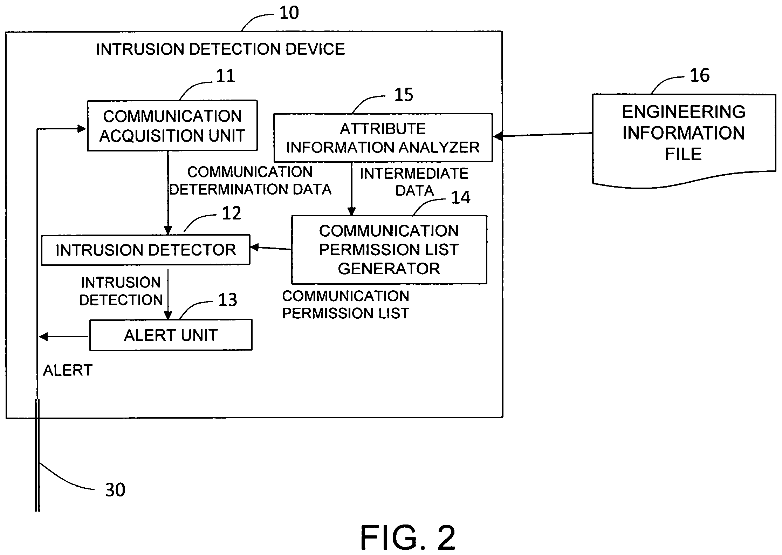

As shown in FIG. 2, the intrusion detection device 10 includes a communication acquisition unit 11, an intrusion detector 12, an alert unit 13, a communication permission list generator 14, and an attribute information analyzer 15.

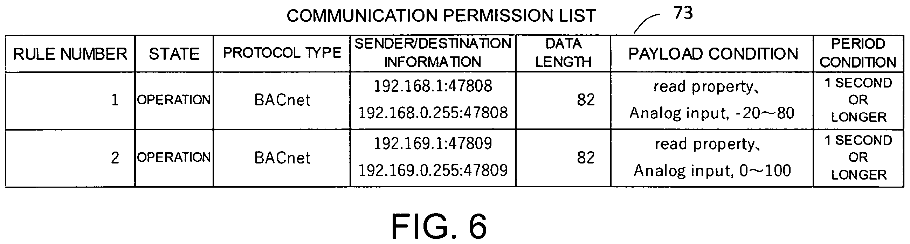

The communication acquisition unit 11 acquires communication data related to the air conditioner device 56 and the lighting device 57 between the monitoring and controlling terminal 40 and the controllers 51 and 52, and flowing in the network 30, generates communication determination data, and outputs the generated communication determination data to the intrusion detector 12. The communication data is a data set including a protocol type, a sender/destination information, a data length, and a payload condition. The communication determination data is a data set in which a system state of the management system 100 and a period of the communication data are added to the communication data, and, similar to a communication rule in a communication permission list 73 shown in FIG. 6, is a data set including various items including a number, the system state, the protocol type, the sender/destination information, the data length, the payload condition, and the period. The system state of the management system 100 refers to any of the states of operation, maintenance, suspension, startup, and shutting-down.

The intrusion detector 12 compares the communication determination data which is output by the communication acquisition unit 11 and the communication permission list 73 stored in the communication permission list generator 14, to detect intrusion into the network 30. When the intrusion into the network 30 is detected, the intrusion detector 12 outputs an intrusion detection signal to the alert unit 13. Here, as shown in FIG. 6, the communication permission list 73 is a list of communication rules which are data sets each including various items including a rule number, the system state, the protocol type, the sender/destination information, the data length, the payload condition, and a period condition.

The alert unit 13 outputs to the network 30, when the intrusion detection signal is input from the intrusion detector 12, an alert indicating detection of intrusion.

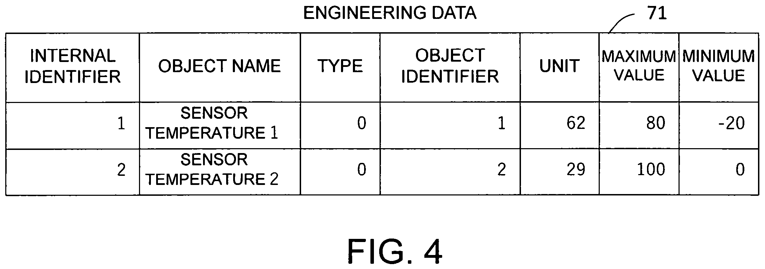

The attribute information analyzer 15 reads engineering data 71 including attribute information of an object such as a temperature sensor of the air conditioner device 56 and the lighting device 57 from an engineering information file 16, and analyzes the engineering data 71, to extract information necessary for generation of the communication permission rule. Here, as shown in FIG. 4, the engineering data 71 is engineering information which is a list of data sets each including various items including an internal identifier number, an object name, a type, an object identifier, a unit, a maximum value, and a minimum value.

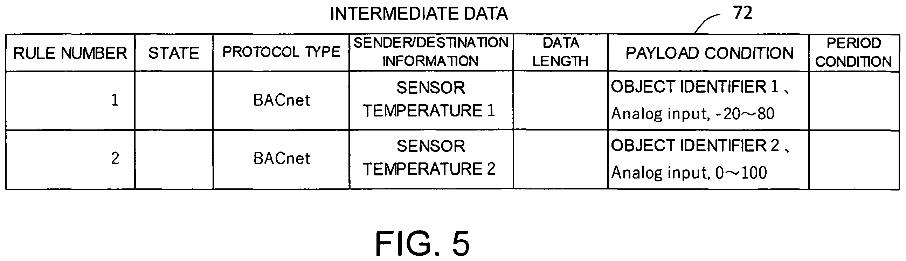

The attribute information analyzer 15 formulates the extracted information necessary for generating the communication permission rule into a communication specification format of the network 30, and outputs the same as intermediate data 72 to the communication permission list generator 14. Here, the intermediate data 72 is a data set having storage regions similar to the communication specification format of the network 30. As shown in FIG. 5, similar to the communication permission list 73, the intermediate data 72 is a data set having various storage regions for the rule number, the system state, the protocol type, the sender/destination information, the data length, the payload condition, and the period condition, and has the fields of the state and the data length empty.

The communication permission list generator 14 combines, with the intermediate data 72 which is input from the attribute information analyzer 15, management information including structure information of the network 30, and input/output information of the object such as the temperature sensor of the air conditioner device 56 and the lighting device 57, to generate a communication permission rule, and stores the same in the communication permission list 73. In the intrusion detection device 10 of the present embodiment, the management information is stored inside the device as a default setting.

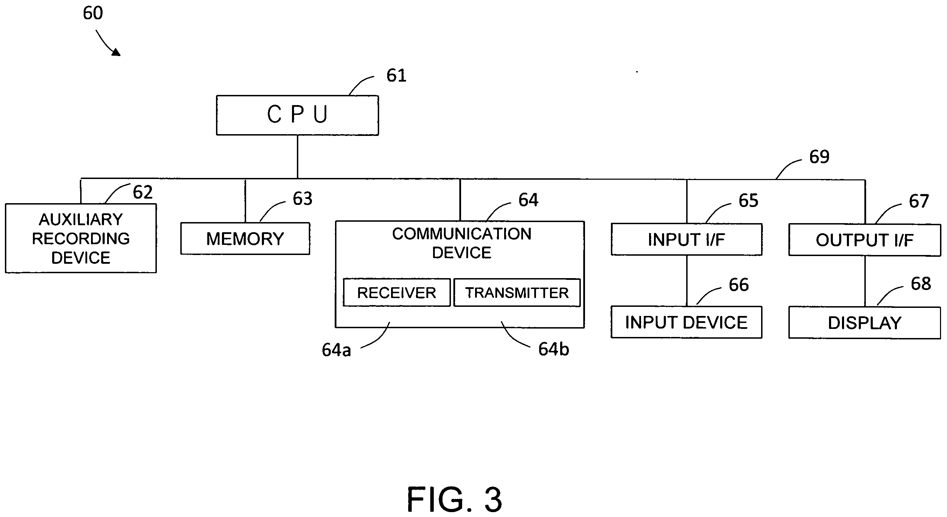

The communication acquisition unit 11, the intrusion detector 12, the alert unit 13, the communication permission list generator 14, and the attribute information analyzer 15 of the intrusion detection device 10 described above are realized by a computer 60 shown in FIG. 3.

The computer 60 comprises a CPU 61, an auxiliary recording device 62, a memory 63, a communication device 64, an input interface 65, an output interface 67, and a data bus 69 connecting these elements. The CPU 61 executes information processing, and also controls other hardwares connected via the data bus 69.

The auxiliary recording device 62 is formed from, for example, a ROM, a flash memory, a hard disk drive, or the like. The memory 63 is, for example, a RAM. The communication device 64 includes a receiver 64a for receiving data from the network 30 and a transmitter 64b for outputting data to the network 30. The communication device 64 is formed from, for example, a communication chip. To the input interface 65, an input device 66 such as, for example, a keyboard a mouse, a touch panel, or the like, is connected. To the output interface 67, a display 68 is connected.

The auxiliary recording device 62 stores program(s) for realizing functions of the communication acquisition unit 11, the intrusion detector 12, the alert unit 13, the communication permission list generator 14, and the attribute information analyzer 15. The program is executed by the CPU 61.

The communication acquisition unit 11, the intrusion detector 12, the alert unit 13, the communication permission list generator 14, and the attribute information analyzer 15 which are functional blocks of the intrusion detection device 10 are realized by cooperation of each hardware component of the computer 60 shown in FIG. 3 and program(s) executed by the CPU 61.

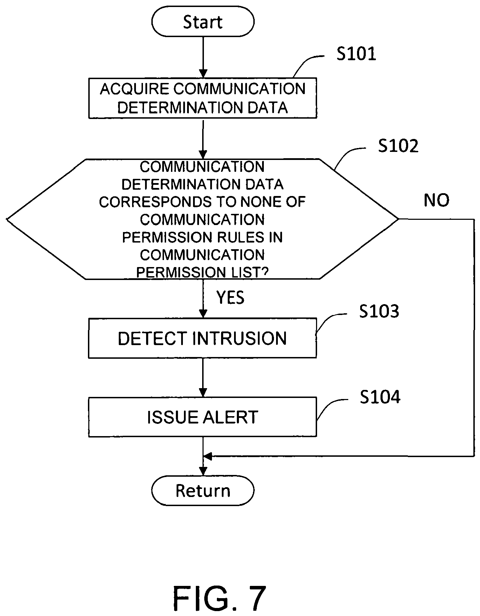

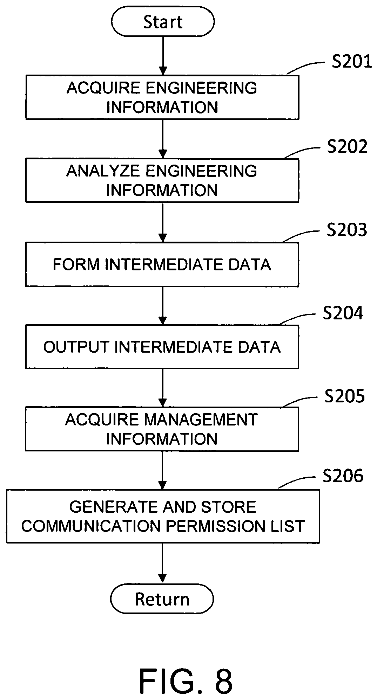

Next, with reference to FIGs. 7 and 8, an operation of the intrusion detection device 10 according to the present embodiment will be described. FIGs. 7 and 8 are also diagrams showing an intrusion detection method. First, with reference to FIG. 7, a basic operation of the intrusion detection device 10 will be described. The intrusion detection device 10 repeatedly executed operations of steps S101 to S104 of FIG. 7 at a predetermined interval.

As shown in step S101 of FIG. 7, the communication acquisition unit 11 acquires communication data related to the air conditioner device 56 and the lighting device 57 between the monitoring and controlling terminal 40 and the controllers 51 and 52, and flowing in the network 30 (communication data acquisition step). The communication data is a data set including the protocol type, the sender/destination information, the data length, and the payload condition. The communication acquisition unit 11 adds the system state and the period to the acquired communication data to generate the communication determination data, and outputs the generated communication determination data to the intrusion detector 12 (determination data generation step). Similar to the communication rule in the communication permission list 73 shown in FIG. 6, the communication determination data is a data set including various items including the number, the system state, the protocol type, the sender/destination information, the data length, the payload condition, and the period.

As shown in step S102 of FIG. 7, the intrusion detector 12 compares the communication determination data which is input from the communication acquisition unit 11 and the communication rule in the communication permission list 73 shown in FIG. 6. In the comparison, for example, various items in the communication determination data including the system state, the protocol type, the sender/destination information, the data length, the payload condition, and the period condition are compared to various items in a communication rule of a rule number 1 in the communication permission list 73 including the system state, the protocol type, the sender/destination information, the data length, the payload condition, and the period condition. When all items match, the intrusion detector 12 determines that the communication determination data corresponds to the communication rule of the rule number 1 in the communication permission list 73.

On the other hand, if any of the items differs, the intrusion detector 12 judges that the communication determination data does not correspond to the communication rule of the rule number 1 in the communication permission list 73, and compares the communication determination data to the communication rule of a rule number 2. If the communication determination data matches none of the communication rules, the intrusion detector 12 judges that the communication determination data corresponds to none of the communication rules in the communication permission list 73, the process proceeds to step S103 of FIG. 7, and the intrusion detector 12 outputs the intrusion detection signal to the alert unit 13 (intrusion detection step).

When the intrusion detection signal is input from the intrusion detector 12, the alert unit 13 outputs an alert to the network 30 in step S104 of FIG. 7. The output alert is input to the monitoring and controlling terminal 40 via the network 30, and is displayed on the display 68 of the monitoring and controlling terminal 40.

When the communication determination data matches any of the communication rules in step S102 of FIG. 7, the intrusion detector 12 completes the routine without outputting the intrusion detection signal, and starts a next routine.

Next, with reference to FIG. 8, generation of the communication permission list 73 in the intrusion detection device 10 will be described. Steps S201 to S206 of FIG. 8 form a communication permission list generation step. Further, steps S201 to S204 of FIG. 8 form an attribute information analysis step.

As shown in step S201 of FIG. 8, the attribute information analyzer 15 acquires the engineering data 71 as shown in FIG. 4 from the external engineering information file 16. As already described, the engineering data 71 is a list of attribute information data of the object such as the temperature sensor of the air conditioner device 56 and the lighting device 57, and, as shown in FIG. 4, is a list of data sets including various items including the internal identifier, the name of the object such as a temperature sensor 1, the type, the object identifier, the unit, the maximum value, and the minimum value. The engineering information file 16 is used when the building management system 100 is constructed using the BACnet communication, and may be, for example, a file of a CSV format in which attribute information of the object such as the temperature sensor is separated by commas, according to the BACnet specification.

In step S202 of FIG. 8, the attribute information analyzer 15 analyzes the acquired engineering data 71, to extract information necessary for generation of the communication permission rule. In steps 203 of FIG. 8, the attribute information analyzer 15 formulates the extracted information to the communication specification format of the network 30, and outputs the same as the intermediate data 72.

As already described, the intermediate data 72 has storage regions similar to the communication specification format of the network 30, similar to the communication permission list 73, as shown in FIG. 5. The attribute information analyzer 15 analyzes the engineering data 71, and extracts that the object name of the "sensor temperature 1" in the engineering data 71 corresponds to the object identifier 1, that the data is analog input data, that the maximum value is 80, and the minimum value is -20. The attribute information analyzer 15 stores the "sensor temperature 1" which is the object name in the field of the sender/destination information on a row of the rule number 1 of the intermediate data 72, and stores the data of the "object identifier 1, Analog input, -20∼80" in the field of the payload condition. Similarly, the attribute information analyzer 15 extracts that the object name of "sensor temperature 2" in the engineering data 71 corresponds to the object identifier 2, that the data is analog input data, that the maximum value is 100, and the minimum value is 0. The attribute information analyzer 15 stores the object name of the "sensor temperature 2" in the field of the sender/destination information of a row of the rule number 2 of the intermediate data 72, and the data of "object identifier 2, Analog input, 0-100" in the field of the payload condition. In addition, because the BACnet is used for the communication in the network 30, BACnet is stored in the protocol type.

The attribute information analyzer 15 extracts information necessary for generation of the communication permission rule, inputs the information into various items of the intermediate data 72, and generates the intermediate data 72 for all objects included in the engineering data 71. In this manner, the attribute information analyzer 15 analyzes the engineering data 71 to extract information necessary for generation of the communication permission rule, and forms the intermediate data 72 by inputting the information in the items of the intermediate data 72 having the storage regions similar to the communication specification format of the network 30.

After the attribute information analyzer 15 forms the intermediate data 72 in step S203 of FIG. 8, the attribute information analyzer 15 outputs the formed intermediate data 72 to the communication permission list generator 14, as shown in step S204 of FIG. 8.

The communication permission list generator 14 reads default management information stored internally, as shown in step S205 of FIG. 8. Here, the management information includes the structure information of the network 30 and input/output information of the object such as the temperature sensor of the air conditioner device 56 and the lighting device 57. The structure information of the network 30 is, for example, the sender/destination address, the data length, or the like. The input/output information of the object is, for example, a command condition such as reading and writing of the object identifier.

In step S206 of FIG. 8, the communication permission list generator 14 converts the object name of "sensor temperature 1" stored in the sender/destination information of the intermediate data 72 into a sender/destination address, based on the read management information. In addition, the communication permission list generator 14 converts the "object identifier 1" stored in the payload condition to "read property" which is input/output information of the sensor temperature 1. Then, the communication permission list generator 14 adds "82" to the data length, "operation" to the state, and "one second or longer" to the period condition. In this manner, the communication permission list generator 14 combines the management information to the intermediate data 72, to generate the communication permission list 73 as shown in FIG. 6. In step S206 of FIG. 8, the communication permission list generator 14 stores the generated communication permission list 73 in the memory 63.

As described, the intrusion detection device 10 of the present embodiment generates the communication permission list 73 based on the engineering data 71 in the engineering information file 16 used in constructing the building management system 100 using the BACnet communication. Thus, the communication permission list 73 can be generated more easily in comparison to processes based on learning or the like.

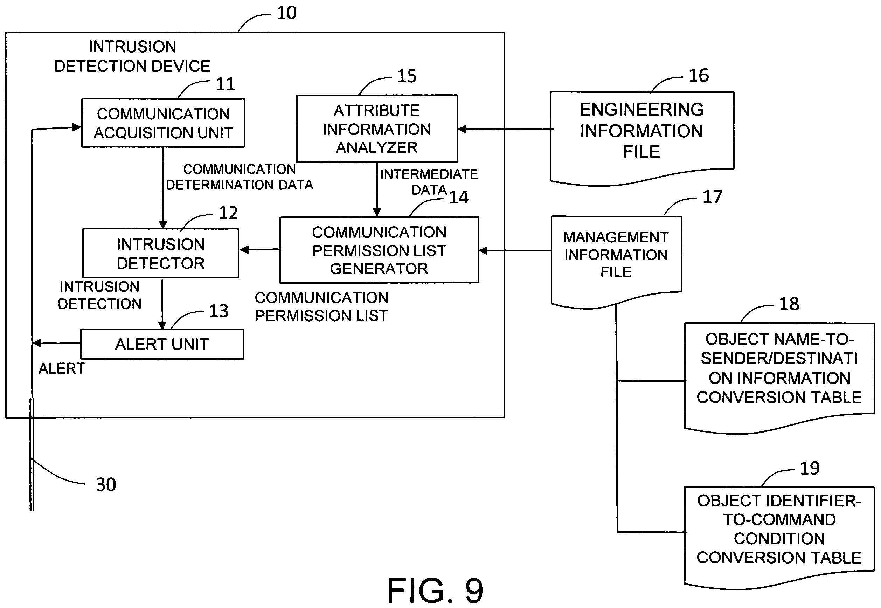

Next, with reference to FIG. 9, the intrusion detection device 10 according to another embodiment of the present disclosure will be described. In the intrusion detection device 10 shown in FIG. 9, a management information file 17 is input from outside so as to enable input of the management information from the outside. As shown in FIG. 9, the management information file 17 includes an object name-to-sender/destination information conversion table 18, and an object identifier-to-command condition conversion table 19.

The intrusion detection device 10 of the present embodiment has a configuration to read the management information from an external file, and thus, the communication permission list 73 can be re-produced easily even when there is a change in the management information.

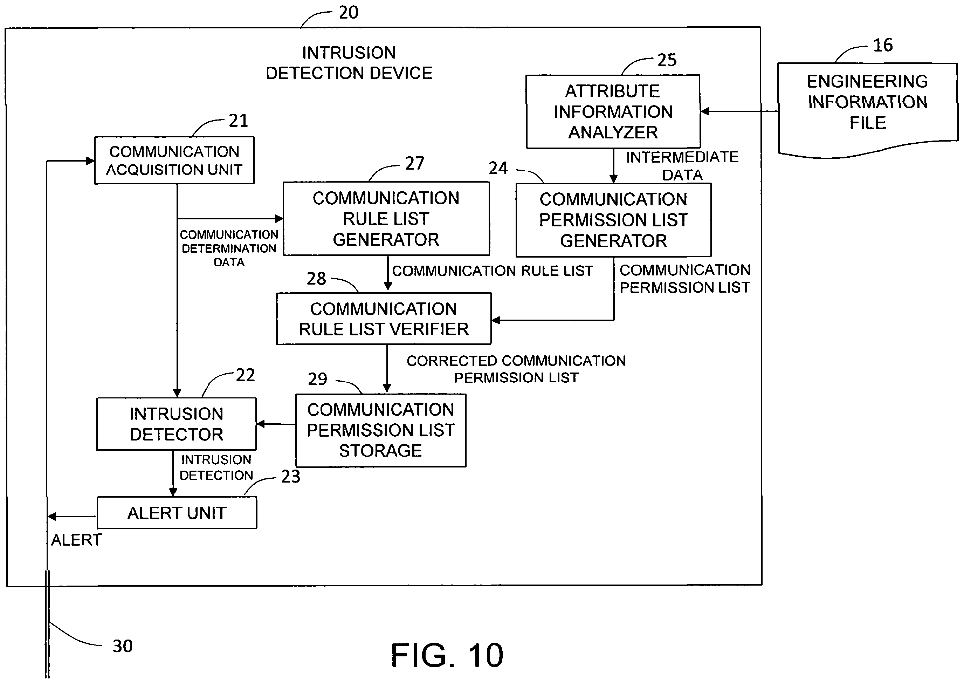

Next, with reference to FIGs. 10 to 12, an intrusion detection device 20 according to another embodiment of the present disclosure will be described. Portions similar to those of the intrusion detection device 10 described above with reference to FIGs. 1 to 8 will only be briefly described.

The intrusion detection device 20 shown in FIG. 10 includes a communication acquisition unit 21, an intrusion detector 22, an alert unit 23, a communication rule list generator 27, a communication permission list generator 24, an attribute information analyzer 25, a communication rule list verifier 28, and a communication permission list storage 29. The communication acquisition unit 21, the alert unit 23, and the attribute information analyzer 25 are similar to the communication acquisition unit 11, the alert unit 13, and the attribute information analyzer 15, respectively, of the intrusion detection device 10 which is already described.

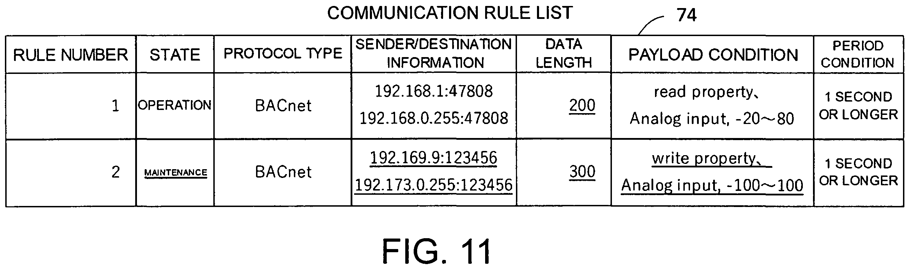

The communication rule list generator 27 learns communication determination data acquired by the communication acquisition unit 21 to generate a communication rule list 74 as shown in FIG. 11, and outputs the communication rule list 74 to the communication rule list verifier 28. The communication permission list generator 24 generates the communication permission list 73 in an operation similar to that of the communication permission list generator 14 which is already described, and outputs the generated communication permission list 73 to the communication rule list verifier 28. The communication rule list verifier 28 compares the communication rule list 74 and the communication permission list 73, corrects the communication rule list 74, and stores a corrected communication permission list in the communication permission list storage 29. The intrusion detector 22 detects the intrusion by comparing the communication determination data which is input from the communication acquisition unit 21 and the corrected communication permission list stored in the communication permission list storage 29.

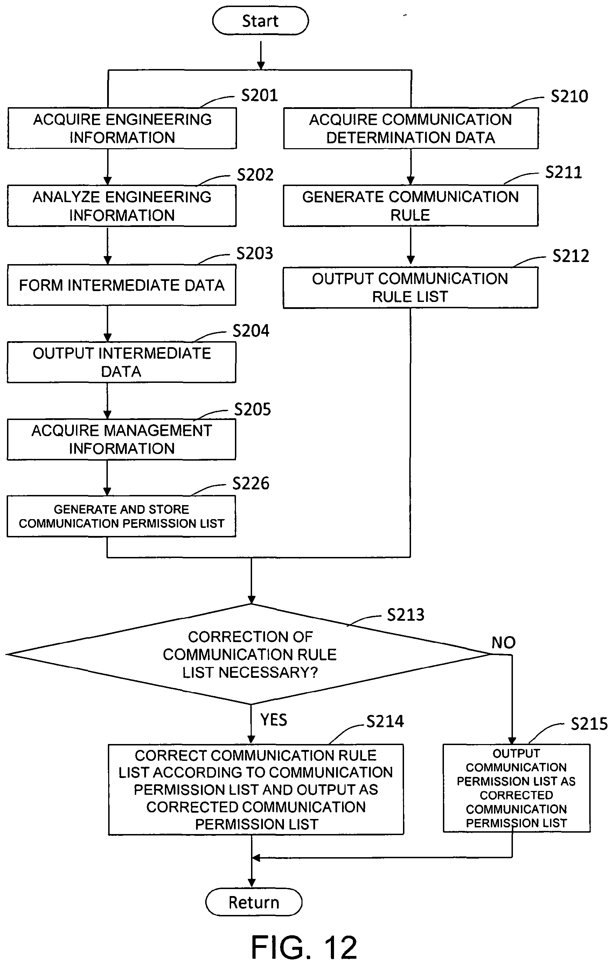

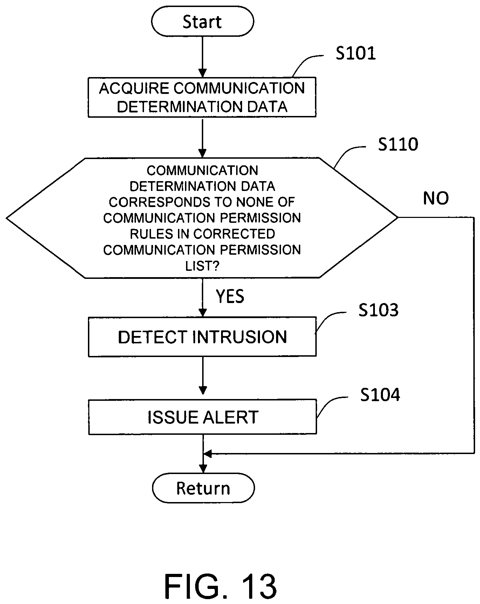

With reference to FIGs. 12 and 13, an operation of the intrusion detection device 20 of the present embodiment will be described. Steps similar to those of the operation of the intrusion detection device 10 described above with reference to FIGs. 7 and 8 are assigned the same reference numerals, and will not be described again. FIGs. 12 and 13 are also diagrams showing an intrusion detection method.

Similar to the communication permission list generator 14, the communication permission list generator 24 forms and outputs the intermediate data 72 in steps S201 to S204 of FIG. 12, reads the management information in step S205 of FIG. 12, generates the communication permission list 73 by a method similar to that of the communication permission list generator 14 in step S226 of FIG. 12, and outputs the generated communication permission list 73 to the communication rule list verifier 28. Steps S201 to S226 of FIG. 12 form a communication permission list generation step. In addition, steps S201 to S204 of FIG. 12 form an attribute information analysis step.

As shown in step S210 of FIG. 12, the communication rule list generator 27 acquires the communication determination data from the communication acquisition unit 21, and learns the communication determination data, to generate the communication rule list 74 shown in FIG. 11. As already described, similar to the communication rule in the communication permission list 73 shown in FIG. 6, the communication determination data is a data set including various items including the number, the system state, the protocol type, the sender/destination information, the data length, the payload condition, and the period condition. The communication rule list generator 27 extracts the data set included in the communication determination data, and inputs the information to the items of the communication rule list 74 having the storage regions of the communication specification format of the network 30, to generate the communication rule list 74. With learning, the same communication rule is combined into one communication rule, and the communication rule list 74 as shown in FIG. 11 is generated. In step S212 of FIG. 12, the communication rule list generator 27 outputs the generated communication rule list 74 to the communication rule list verifier 28. The generation of the communication rule list may be executed, for example, during an operation test when the monitoring and controlling terminal 40 is installed. Steps S210 to S212 of FIG. 12 form a communication rule list generation step.

A communication rule of a rule number 1 among the communication rules shown in FIG. 11 differs from the communication rule of the rule number 1 of the communication permission list 73 shown in FIG. 6 only in the data length, and the other items are the same. In addition, a communication rule of a rule number 2 of the communication rule list 74 differs from the communication rule of the rule number 2 of the communication permission list 73 shown in FIG. 6 in the state, the sender/destination information, the data length, and the payload condition. Such a communication rule significantly deviates from the engineering information, and is judged as being generated by intrusion. Thus, in step S213 of FIG. 12, the communication list verifier 28 compares and corrects the communication rule list 74 in the following manner, to generate a corrected communication permission list.

In step S213 of FIG. 12, the communication rule list verifier 28 compares the communication rule list 74 and the communication permission list 73, and determines whether or not correction of the communication rule list 74 is necessary. In step S213 of FIG. 12, the communication rule list verifier 28 judges that correction of the communication rule list 74 is necessary and the process proceeds to step S214 of FIG. 12 when one communication rule in the communication rule list 74 differs only partially from any of the communication permission rules in the communication permission list 73. In step S214 of FIG. 12, the communication rule list verifier 27 corrects the one communication rule according to the communication permission list 73, and outputs the corrected communication permission list to the communication permission list storage 29.

Moreover, in step S213 of FIG. 12, the communication rule list verifier 28 judges that the correction of the communication rule list 74 is necessary when one of the communication rules in the communication rule list 74 differs from any of the communication permission rule in the communication permission list 73 and it is not possible to correct the one communication rule according to the communication permission rule, and the process proceeds to step S214 of FIG. 12. In step S214 of FIG. 12, the one communication rule is deleted from the communication rule list 74, and the corrected communication permission list is output to the communication permission list storage 29.

In addition, in step S213 of FIG. 12, the communication rule list verifier 28 judges that correction of the communication rule list 74 is necessary when there is a communication rule in the communication permission rule related to an object included in the communication permission list 73, which is not included as a communication rule related to the object in the communication rule list 74, and the process proceeds to step S214 of FIG. 12. In step S214 of FIG. 12, the communication permission rule is added to the communication rule list 74, and the corrected communication permission list is output to the communication permission list storage 29. For example, when there is sender/destination information which is included in the communication permission list 73 but not included in the communication rule list 74, a communication permission rule including the sender/destination information is added to the communication rule list 74 as a communication rule, and the corrected communication permission list is output to the communication permission list storage 29.

On the other hand, in step S213 of FIG. 12, when each of the communication rules in the communication rule list 74 matches any of the communication permission rules in the communication permission list 73 and each of the communication permission rules related to an object included in the communication permission list 73 is included as a communication rule in the communication rule list 74, the communication rule list verifier 28 judges that the correction of the communication rule list 74 is not necessary, and the process proceeds to step S215 of FIG. 12. In step S215 of FIG. 12, the communication rule list verifier 28 outputs the communication rule list 74 as the corrected communication permission list to the communication permission list storage 29. Steps S213 to S215 of FIG. 12 form a communication rule list verification step.

For example, the communication rule of the rule number 1 of the communication rule differs from the communication permission rule of the rule number 1 of the communication permission list 73 shown in FIG. 6 only in the data length, and the other items are the same. In this case, the communication rule list verifier 28 corrects the data length according to the communication permission list 73, and outputs the communication rule list 74 including the corrected communication rule as the corrected communication permission list to the communication permission list storage 29. When the communication rule and the communication permission rule do not match in many items such as in the case of the communication rule of the rule number 2 of the communication rule list 74 and the communication permission rule of the rule number 2 of the communication permission list 73 shown in FIG. 6, the communication rule list verifier 28 judges that correction of the communication rule according to the communication permission list 73 is difficult, deletes the communication rule of the rule number 2, and outputs the corrected communication permission list to the communication permission list storage 29.

The intrusion detector 22 acquires the communication determination data from the communication acquisition unit 21 in step S101 of FIG. 13 (determination data acquisition step), and, when the intrusion detector 22 judges in step S110 of FIG. 13 that the communication determination data corresponds to none of the communication permission rules in the corrected communication permission list stored in the communication permission list storage 29, the process proceeds to step S103 of FIG. 13, intrusion is detected, and the intrusion detector 22 outputs an intrusion detection signal to the alert unit 23. The alert unit 23 outputs an alert to the network 30 (intrusion detection step).

As described, when learning the communication data to generate the communication rule list 74, the intrusion detection device 20 of the present embodiment uses the communication permission list 73 generated based on the engineering data 71 to correct the communication rule list 74. Thus, a communication rule significantly deviating from the engineering information can be removed. In this manner, accuracy of the communication permission list 73 can be secured with a simple method. In addition, because a communication rule related to an object which is not included in the communication rule list 74 is added using the communication permission list 73, a degree of coverage of the communication rule can be improved.

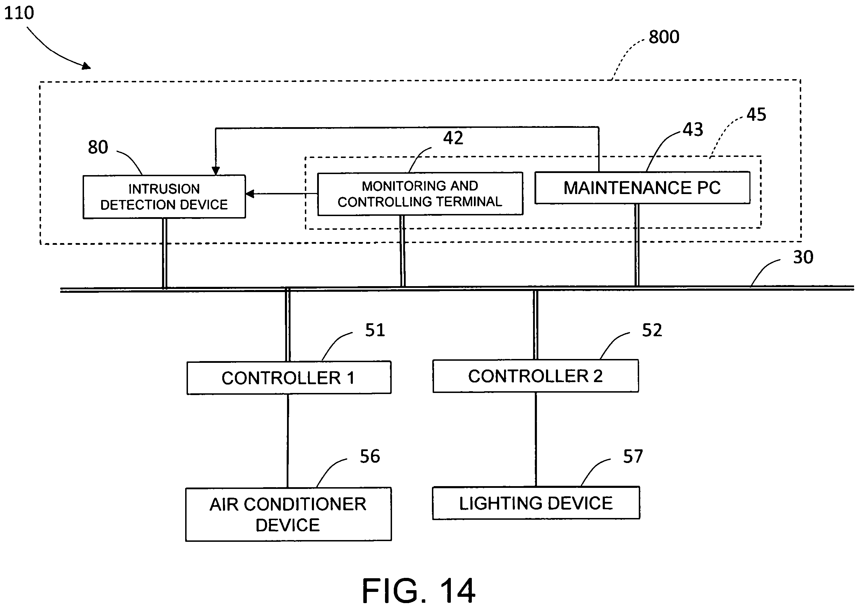

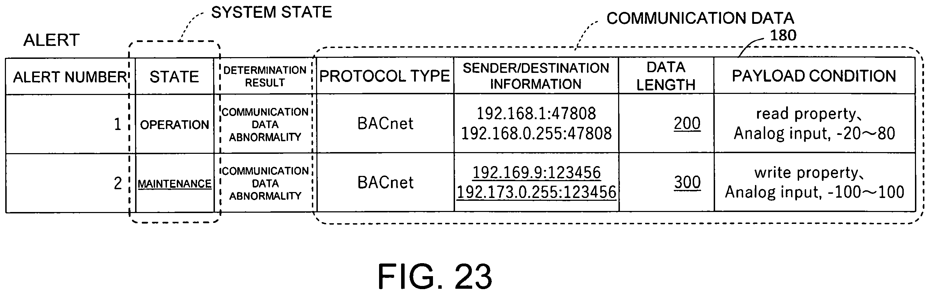

Next, an intrusion detection system 800 according to an embodiment of the present disclosure will be described with reference to FIGs. 14 to 28. In the intrusion detection devices 10 and 20 described above, of the data of the regions of the communication permission list 73, a system state condition which cannot be generated based on the engineering data 71 is read and set from default management information stored internally or an external management information file. In such a method, there had been cases where a number of subsequent corrections becomes large, and a long time is required for generating the communication permission list 73.

The intrusion detection system 800 of the present embodiment acquires the system state from an external device 45 which sets a system state of a management system 110 connected to the network 30, and generates a communication permission list 177 based on the system state. Thus, the communication permission list 177 having high precision can be generated more easily. In addition, the intrusion detection system 800 of the present embodiment can calculate a period of communication using time-stamped communication data 378 to which a time stamp showing a data acquisition time is added to communication data 178, and can set a period condition of the communication permission list. In this case, a communication permission list 277 can be more simply generated. The embodiment will now be described.

First, with reference to FIG. 14, the management system 110 of the building facility to which the intrusion detection system 800 is applied will be described. The management system 110 comprises the controllers 51 and 52 to which the air conditioner device 56 and the lighting device 57 which are building facilities are connected, a monitoring and controlling terminal 42, the network 30 which connects the controllers 51 and 52 and the monitoring and controlling terminal 42, an intrusion detection device 80 which is connected to the network 30, and a maintenance PC 43. The intrusion detection system 800 is a system which detects intrusion into the network 30 which is a part of the management system 110.

The monitoring and controlling terminal 42 and the maintenance PC 43 set the system state of the management system 110, and output the set system state to the intrusion detection device 80. The monitoring and controlling terminal 42 and the maintenance PC 43 are respectively a part of the external device 45 for setting the system state of the management system 110. The system state of the management system 110 is one state of the operation, the maintenance, the suspension, the startup, and the shutting-down.

The monitoring and controlling terminal 42 has the same structure as that of the monitoring and controlling terminal 40 described above with reference to FIG. 1 except for the above-described points. In addition, the maintenance PC 43 is a computer which can be connected to the network 30 and can execute a similar operation as the monitoring and controlling terminal 42. The maintenance PC 43 can set, when a continuity test of the management system 110 is executed, the state of the management system 110 to one state of the operation, the maintenance, the suspension, the startup, and the shutting-down.

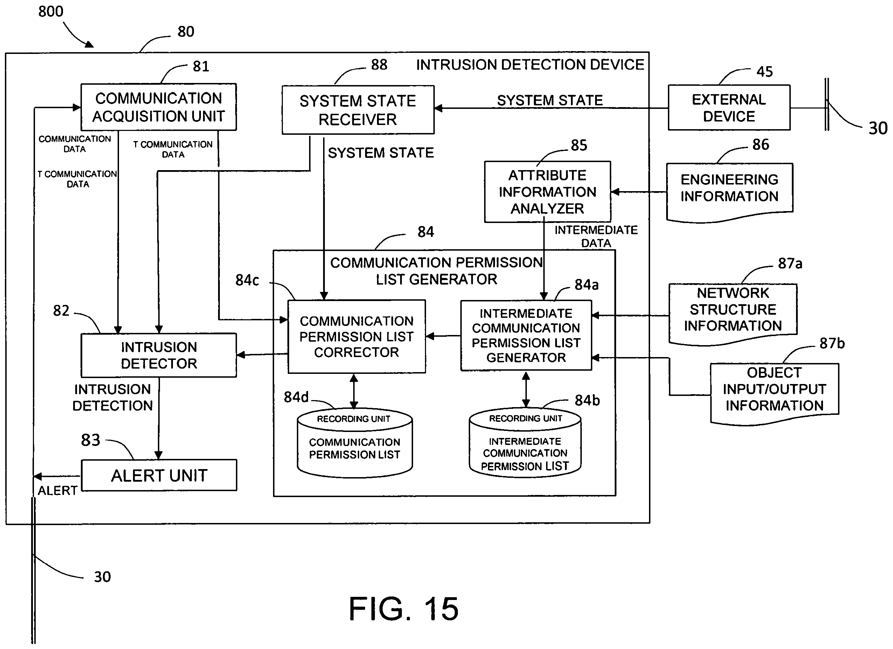

As shown in FIG. 15, the intrusion detection device 80 comprises a communication acquisition unit 81, an intrusion detector 82, an alert unit 83, a communication permission list generator 84, an attribute information analyzer 85, and a system state receiver 88. The communication permission list generator 84 includes an intermediate communication permission list generator 84a, a recording unit 84b for storing an intermediate communication permission list, a communication permission list corrector 84c, and a recording unit 84d for storing a communication permission list.

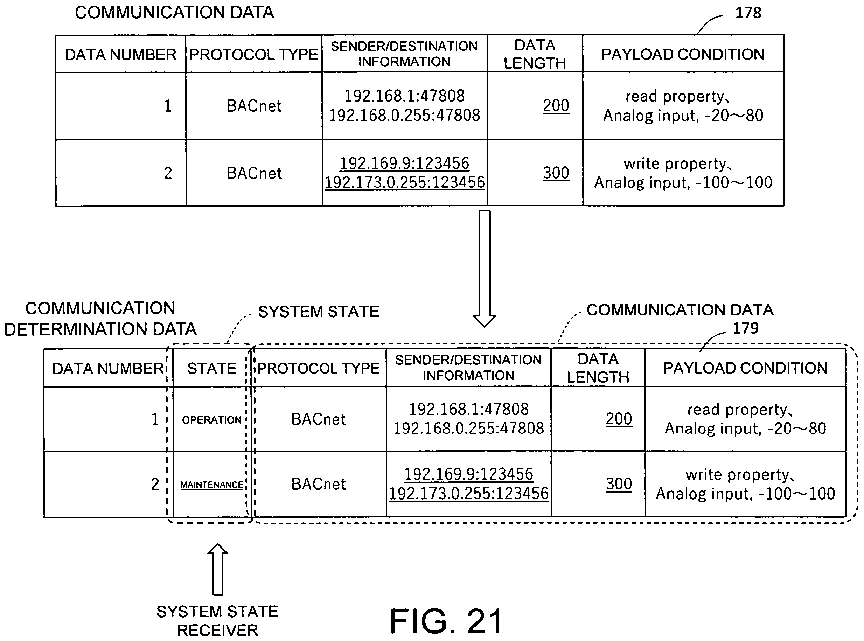

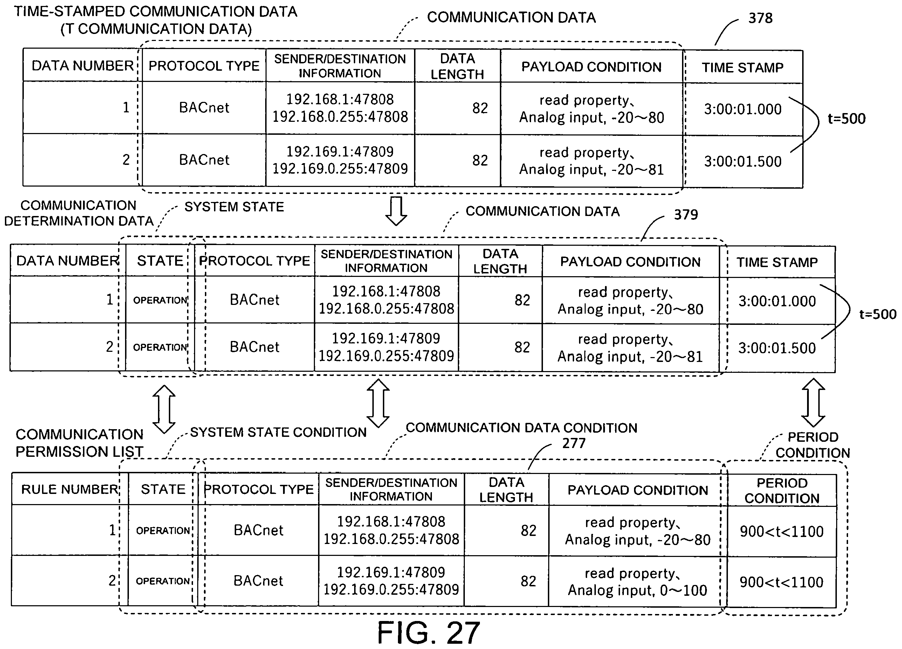

The communication acquisition unit 81 acquires communication data related to the air conditioner device 56 and the lighting device 57 between the monitoring and controlling terminal 42 and the controllers 51 and 52 and flowing in the network 30, and outputs the communication data to the intrusion detector 82. As shown in FIG. 21, the communication data is a data set including the protocol type, the sender/destination information, the data length, and the payload condition. The communication acquisition unit 81 also adds a time stamp showing the acquisition time to the communication data to form time-stamped communication data shown in FIG. 27 (hereinafter, also referred to as "T communication data"), and outputs the time-stamped communication data to the intrusion detector 82 and the communication permission list corrector 84c.

The system state receiver 88 receives the system state which is set by the external device 45, and outputs the system state to the communication permission list corrector 84c and to the intrusion detector 82.

The attribute information analyzer 85 reads the engineering data 71 including attribute information of an object such as a temperature sensor of the air conditioner device 56 and the lighting device 57 from the engineering information file 86, analyzes the engineering data 71 to extract information necessary for generating an intermediate communication permission rule, and outputs as intermediate data 175 to the intermediate communication permission list generator 84a.

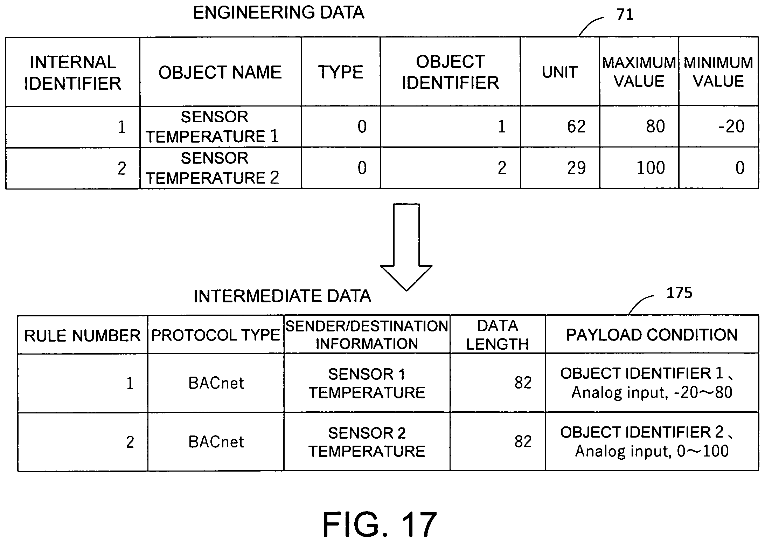

Here, similar to that described above with reference to FIG. 4, the engineering data 71 is engineering information which is a list of data sets including various items including the internal identifier number, the object name, the type, the object identifier, the unit, the maximum value, and the minimum value. In addition, as shown in FIG. 17, the intermediate data 175 is a data set having storage regions of the rule number, the protocol type, the sender/destination information, the data length, and the payload condition.

The intermediate communication permission list generator 84a generates the intermediate communication permission rule which defines a communication data condition for permitting communication based on the intermediate data 175 which is input from the attribute information analyzer 85, network structure information which is read from a network structure information file 87a, and object input/output information which is read from an object input/output information file 87b, stores as an intermediate communication permission list 176 in the recording unit 84b, and outputs to the communication permission list corrector 84c.

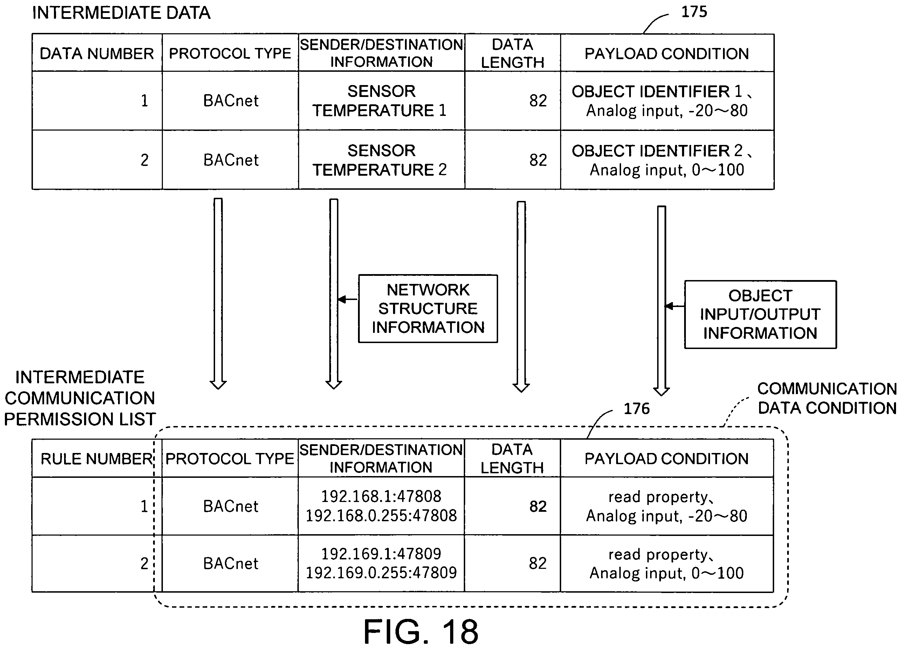

Here, as shown in FIG. 18, the intermediate communication permission list 176 is a data set having storage regions of the rule number, the protocol type, the sender/destination information, the data length, and the payload condition. The protocol type, the sender/destination information, the data length, and the payload condition defined in the intermediate communication permission list 176 form communication data conditions.

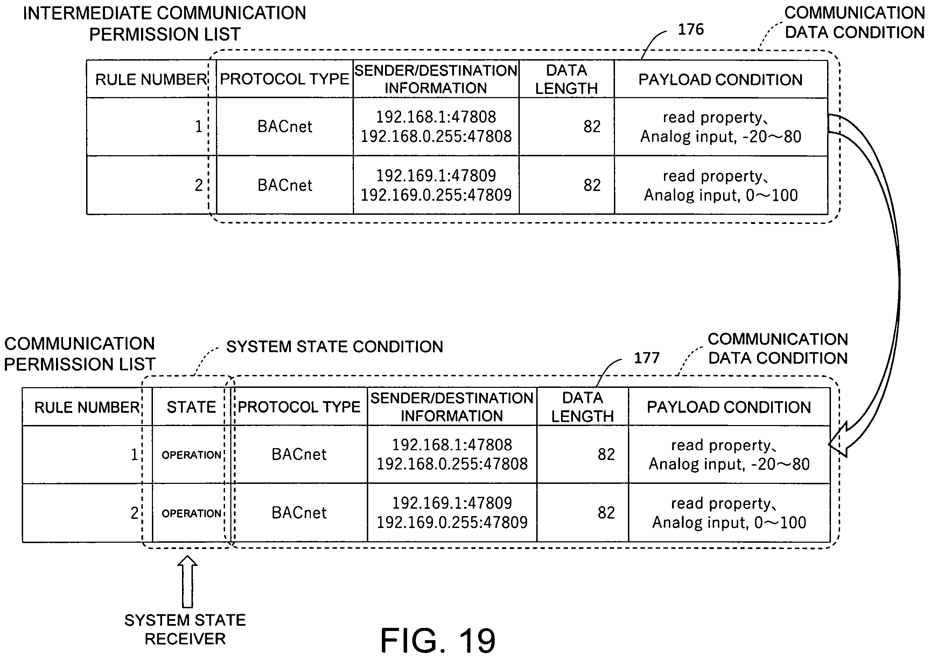

The communication permission list corrector 84c adds a system state condition to be combined with the communication data condition of the intermediate communication permission rule based on the system state which is input from the system state receiver 88 to generate a communication permission rule, stores as the communication permission list 177 as shown in FIG. 19 in the recording unit 84d, and outputs the same to the intrusion detector 82. Here, as shown in FIG. 19, the communication permission list 177 is a list in which the system state condition is added to the intermediate communication permission list 176.

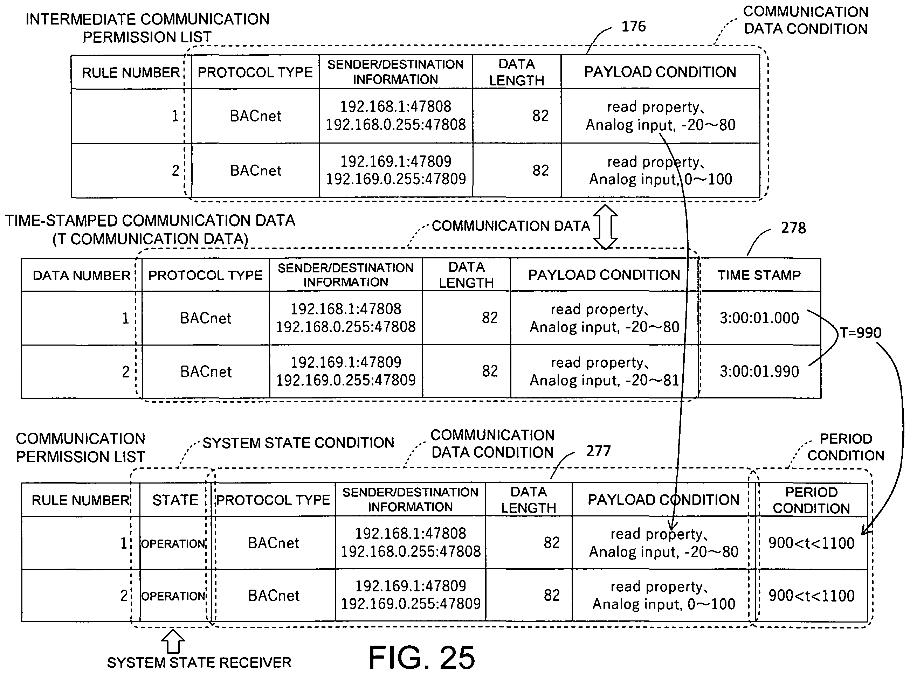

In addition, the communication permission list corrector 84c generates the communication permission list 277 as shown in FIG. 25 based on the T communication data 278 which is input from the communication acquisition unit 81, the system state which is input from the system state receiver 88, and the intermediate communication permission list 176 which is input from the intermediate communication permission list generator, stores the same in the recording unit 84d, and outputs the same to the intrusion detector 82.

The intrusion detector 82 combines the communication data 178 which is input from the communication acquisition unit 81 and the system state which is input from the system state receiver 88, to generate communication determination data 179 as shown in FIG. 21, and compares the generated communication determination data 179 and the communication permission rule in the communication permission list 177, to detect intrusion into the network 30. Further, the intrusion detector 82 combines the T communication data 378 which is input from the communication acquisition unit 81 and the system state which is input from the system state receiver 88, to generate communication determination data 379 as shown in FIG. 27, and compares the generated communication determination data 379 and the communication permission rule in the communication permission list 277, to detect intrusion into the network 30.

The alert unit 83 issues an alert to the network 30 when the intrusion detector 82 detects intrusion.

The communication acquisition unit 81, the intrusion detector 82, the alert unit 83, the communication permission list generator 84, the attribute information analyzer 85, the system state receiver 88, and the intermediate communication permission list generator 84a, the communication permission list corrector 84c, and the recording units 84b and 84d of the communication permission list generator 84, of the intrusion detection device 80, are realized by the computer 60 which is described above with reference to FIG. 3.

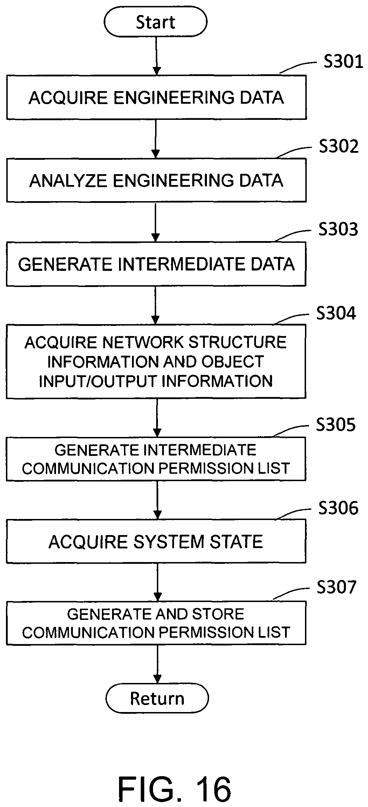

Next, an operation of the intrusion detection system 800 will be described. Frist, with reference to FIGs. 16 to 19, a generation operation of the communication permission list 177 will be described.

As shown in step S301 of FIG. 16, the attribute information analyzer 85 acquires the engineering data 71 shown in FIG. 17 from the engineering information file 86. In step S302 of FIG. 16, the attribute information analyzer 85 analyzes the acquired engineering data 71, and generates the intermediate data 175 shown in FIG. 17 and outputs the intermediate data 175 to the intermediate communication permission list generator 84a in step S303 of FIG. 16.

The intermediate data 175 has a data structure which does not have storage regions of the state and the period condition which are empty in the intermediate data 72 described above with reference to FIG. 5. The data stored in the regions of the rule number, the protocol type, the sender/destination information, the data length, and the payload condition of the intermediate data 175 shown in FIG. 17 are identical to the data stored in the storage regions of the intermediate data 72 described above with reference to FIG. 5.

In step S304 of FIG. 16, the intermediate communication permission list generator 84a acquires the network information from the network structure information file 87a, and acquires the object input/output information from the object input/output information file 87b. The network information includes an object name-to-sender/destination information conversion table for converting the object name such as "sensor temperature 1" included in the sender/destination information of the intermediate data 175 to an IP address of the network. In addition, the object input/output information includes an object identifier-to-command conversion table for converting the object identifier such as "object identifier 1" included in the payload condition of the intermediate data 175 into commands such as read/write.

In step S305 of FIG. 16, the intermediate communication permission list generator 84a refers to the acquired object name-to-sender/destination information conversion table, to convert the "sensor temperature 1" and the "sensor temperature 2" included in the sender/destination information of the intermediate data 175 into the IP address of the network 30, as shown in FIG. 18. In addition, the intermediate communication permission list generator 84a refers to the object identifier-to-command conversion table, to convert the "object identifier 1" and the "object identifier 2" included in the payload condition of the intermediate data 175 into the "read property", respectively, as shown in FIG. 18. Moreover, the protocol type and the data length of the intermediate data 175 are copied. The intermediate communication permission list generator 84a generates the intermediate communication permission list 176 in which the intermediate permission rules are sorted in the order of the rule numbers, as shown in FIG. 18. The intermediate communication permission list generator 84a stores the generated intermediate communication permission list 176 in the recording unit 84b, and outputs the list to the communication permission list corrector 84c.

In step S306 of FIG. 16, the communication permission list corrector 84c acquires the system state of the management system 110 from the system state receiver 88. When the maintenance PC 43 is connected as the external device 45 and, for example, the maintenance PC has set the management system 110 during the continuity test to the state of "operation", the communication permission list corrector 84c acquires the system state of "operation".

In step S307 of FIG. 16, the communication permission list corrector 84c combines the acquired system state as the system state condition with the communication data condition stored in the intermediate communication permission list 176 as shown in FIG. 19, to generate the communication permission list 177. The communication permission list corrector 84c stores the generated communication permission list 177 in the recording unit 84d. As shown in FIG. 19, the communication permission list 177 is a list of communication permission rules defining combinations of the communication data condition and the system state conditions for which communication is to be permitted, sorted in the order of the rule numbers.

In the above description, the generation operation of the communication permission list 177 has been described for a case where the maintenance PC 43 has set the management system 110 in the state of "operation", but the communication permission list 177 can be generated in a similar procedure in the cases where maintenance PC 43 has set the system state to any state other than the "operation" such as "maintenance", "suspension", "startup", and "shutting-down" during the continuity test of the management system 110. In these cases, one of "maintenance", "suspension", "startup", and "shutting-down" is stored in the system state of the communication permission rule.

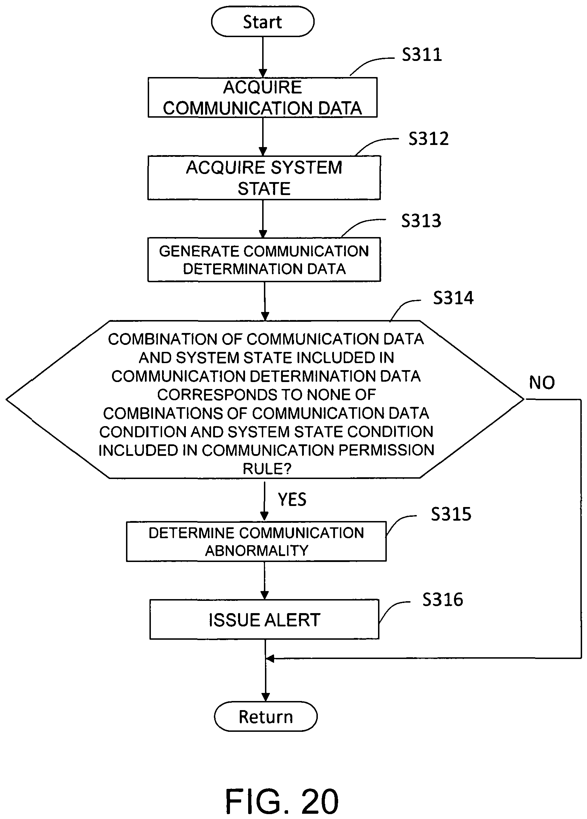

Next, with reference to FIGs. 20 to 23, an intrusion detection operation using the communication permission list 177 shown in FIG. 19 will be described.

As shown in step S311 of FIG. 20, the communication acquisition unit 81 of the intrusion detection device 80 acquires communication data 178 flowing in the network 30. As shown in FIG. 21, the communication data 178 is a data set including the protocol type, the sender/destination information, the data length, and the payload condition. The communication acquisition unit 81 outputs the acquired communication data 178 to the intrusion detector 82.

In step S312 of FIG. 20, the intrusion detector 82 acquires the system state from the system state receiver 88. In step S313 of FIG. 20, the intrusion detector 82 adds the system state to the communication data 178 to generate the communication determination data 179, as shown in FIG. 21. As shown in FIG. 21, the communication determination data 179 has a data structure in which the system state at the time of acquisition of the communication data 178 is combined with the communication data 178.

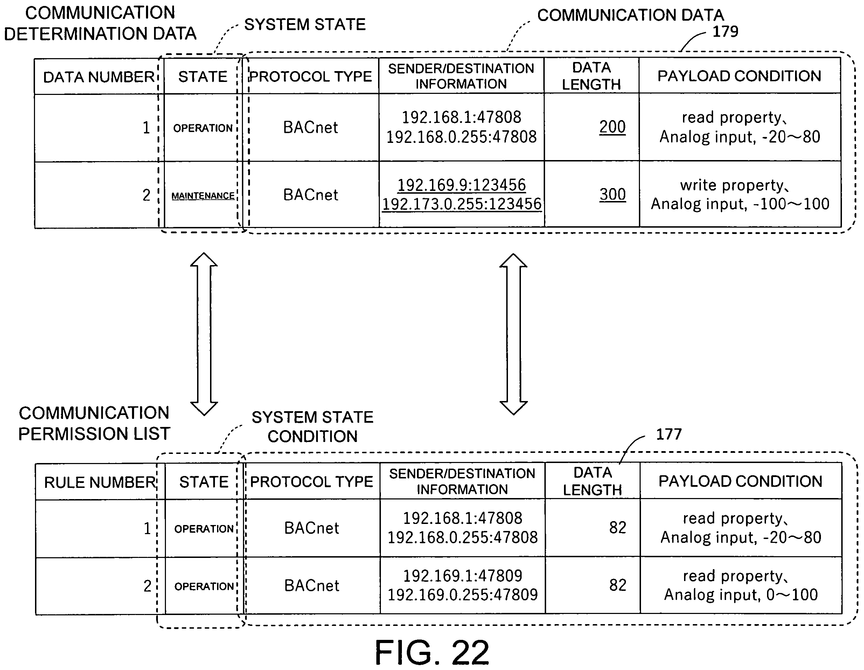

In step S314 of FIG. 20, the intrusion detector 82 compares the communication determination data 179 and the communication permission rule included in the communication permission list 177, as shown in FIG. 22. When the combination of the communication data and the system state included in the communication determination data 179 corresponds to none of combinations of the communication data condition and the system state conditions included in the communication permission rule, the intrusion detector 82 determines as "YES" in step S314 of FIG, 20, proceeds to step S315 of FIG. 20, and detects intrusion. On the other hand, when the combination of the communication data and the system state included in the communication determination data 179 matches any of the combinations of the communication data conditions and the system state conditions included in the communication permission rule, the intrusion detector 82 determines as "NO" in step S314 of FIG. 20, and completes the intrusion detection operation.

As the communication determination data shown by a data number 1 in the communication determination data 179 shown in FIG, 22 differs from either of rule numbers 1 and 2 of the communication permission list in the data length, intrusion is detected by determining as "YES" in step S314 of FIG. 20, and the process proceeds to step S315 of FIG. 20. In addition, as the communication determination data of a data number 2 of FIG. 22 differs from either of the rule numbers 1 and 2 of the communication permission list in the system state, the sender/destination information, and the data length, the intrusion detector 82 detects intrusion by judging as "YES" in step S314 of FIG. 20, and proceeds to step S315 of FIG. 20.

In step S315 of FIG. 20, the intrusion detector 82 determines that the data number 1 of the communication determination data 179 includes a "communication data abnormality". The intrusion detector 82 also determines that the data number 2 of the communication determination data 179 also includes the "communication data abnormality". The intrusion detector 82 then outputs the intrusion detection signal, the determination result, and the communication determination data 179 which is determined as including the communication data abnormality to the alert unit 83.

In step S316 of FIG. 20, the alert unit 83 combines the determination result which is input from the intrusion detector 82 and the communication determination data 179, to generate an alert 180 as shown in FIG. 22, and sends the generated alert 180 to the network 30.

The intrusion detection system 800 of the present embodiment described above acquires the system state from the external device 45 which is connected to the network 30 and which sets the system state of the management system 110, and generates the communication permission list 177 based on the acquired system state. Thus, the communication permission list 177 which is more precise can be generated in a simpler manner. In addition, because the intrusion detection is executed by comparing the communication determination data 179, in which the system state which is input from the external device 45 is combined with the communication data 178, and the communication permission rule in the communication permission list 177, the intrusion can be more accurately detected.

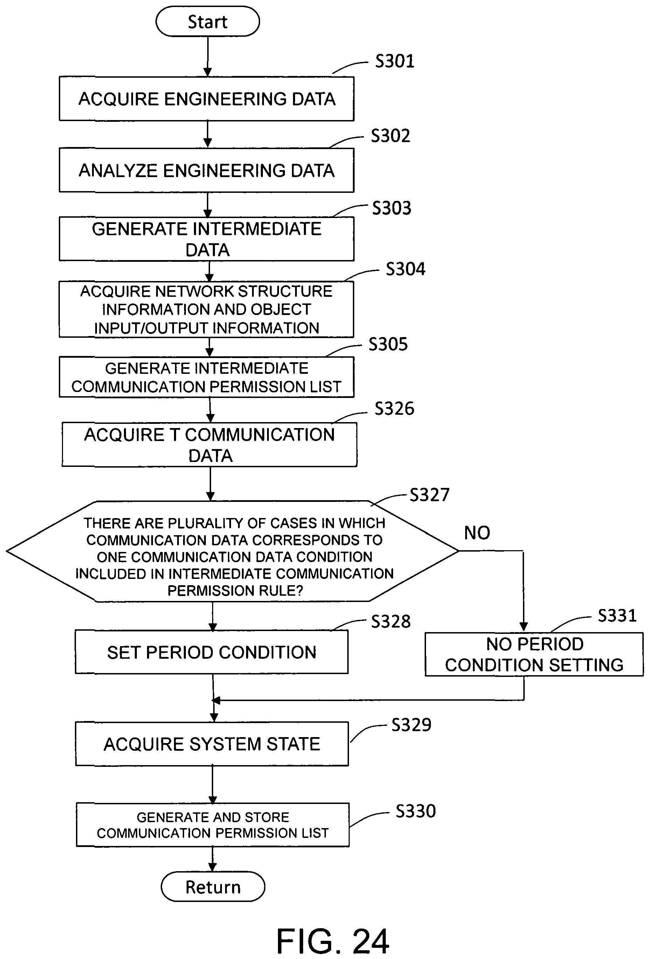

Next, with reference to FIGs. 24 to 28, a case will be described in which a period of communication is calculated using the T communication data 278, a period condition of the communication permission list 277 is set, and the communication permission list 277 is generated.

Similar to the structure described above with reference to FIGs. 16 and 17, the attribute information analyzer 85 acquires the engineering data 71 in step S301 of FIG. 20, analyzes the engineering data 71 in step S302, generates the intermediate data 175 in step S303 of FIG. 24, and outputs the same to the intermediate communication permission list generator 84a. Similar to the structure described above with reference to FIG. 18, the intermediate communication permission list generator 84a generates the intermediate communication permission list 176 from the intermediate data 175 in step S305 of FIG. 24, and outputs the generated list to the communication permission list corrector 84c.

In the present operation, the communication acquisition unit 81 acquires the communication data 178 shown in FIG. 21 from the network, adds a time stamp indicating the acquisition time of the data to form the T communication data 278 shown in FIG. 25, and outputs the T communication data 278 to the intrusion detector 82 and to the communication permission list corrector 84c. In step S326 of FIG. 24, the communication permission list corrector 84c acquires the T communication data 278 from the communication acquisition unit 81.

In step S327 of FIG. 24, the communication permission list corrector 84c compares the communication data included in the T communication data 278 acquired in step S326 and the communication data condition included in the intermediate communication permission list 176 generated in step S305. The communication permission list corrector 84c then judges whether or not there are a plurality of cases where the communication data corresponds to one communication data condition included in the intermediate communication permission rule.

In the example configuration shown in FIG. 25, the communication data of the data number 1 and the data number 2 of the T communication data 278 correspond to the communication data condition included in a rule number 1 of the intermediate communication permission list 176. In this case, the communication permission list corrector 84c judges "YES" in step S327 of FIG, 24, and proceeds to step S328 of FIG. 24. The communication permission list corrector 84c then calculates the period of the communication data to be 990 (msec) from a difference in time stamps of the data number 1 and the data number 2 of the T communication data 278 shown in FIG. 25. The communication permission list corrector 84c then sets a time interval in which a predetermined margin is added to the calculated period as a period condition corresponding to the communication data condition included in the rule number 1 of the intermediate communication permission list 176. In the example configuration of FIG. 25, the communication permission list corrector 84c sets a range of 900 (msec) ∼ 1100 (msec) as the period condition corresponding to the communication data condition included in the rule number 1.

In step S329 of FIG. 24, the communication permission list corrector 84c adds the system state condition and the period condition to the intermediate communication permission rule to generate the communication permission rule, and sorts the communication permission rules in the order of numbers, to generate the communication permission list 277. The communication permission list corrector 84c then stores the generated communication permission list 277 in the recording unit 84d, and also outputs the generated communication permission list 277 to the intrusion detector 82.

On the other hand, when the communication permission list corrector 84c judges "NO" in step S327 of FIG. 24, the communication permission list corrector 84c judges that there is no period condition corresponding to the communication data condition, inputs "no setting" in the field of the period condition of the communication permission rule in step S331 of FIG. 24, proceeds to step S329 of FIG. 24, and generates the communication permission list rule.

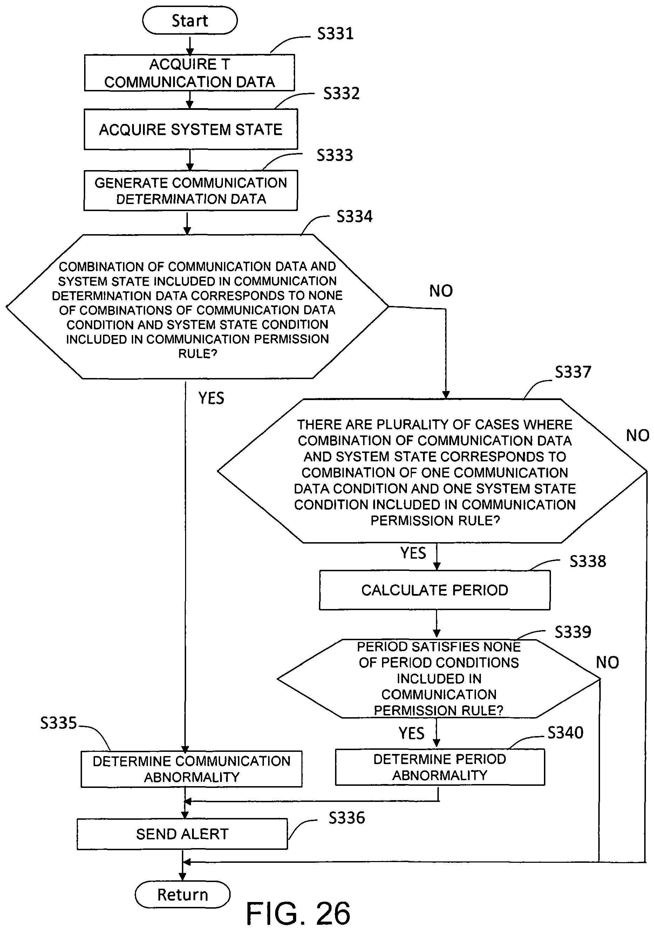

Next, an intrusion detection operation using the communication permission list 277 shown in FIG. 25 will be described with reference to FIGs. 26 to 28.

In step S331 of FIG. 26, the intrusion detector 82 acquires the T communication data 378 shown in FIG. 27 from the communication acquisition unit 81. In addition, in step S332 of FIG. 26, the intrusion detector 82 acquires the system state from the system state receiver 88, and in step S333 of FIG. 26 the intrusion detector 82 adds the system state to the T communication data 378 to generate the communication determination data 379.

In step S334 of FIG. 26, the intrusion detector 82 compares the communication determination data 379 and the communication permission rule included in the communication permission list 277, similar to step S314 of FIG. 20. The intrusion detector 82 then judges whether or not the combination of the communication data and the system state included in the communication determination data 379 corresponds to none of the combinations of the communication data conditions and the system state conditions included in the communication permission rule. When the intrusion detector 82 judges "YES" in step S334 of FIG. 26, the intrusion detector 82 determines communication data abnormality in step S335 of FIG. 26 similar to step S315 of FIG. 20, and issues an alert in step S336 of FIG. 26 similar to step S316 of FIG. 20.

On the other hand, when the intrusion detector 82 determines "NO" in step S334 of FIG. 26, the intrusion detector 82 proceeds to step S337 of FIG. 26, and judges whether or not there are a plurality of cases where the combination of the communication data and the system state included in the communication determination data 379 corresponds to a combination of one communication data condition and one system state condition included in the communication permission rule.

In an example configuration shown in FIG. 27, because the combination of the system state and the communication data are identical for data numbers 1 and 2 of the communication determination data 379, the intrusion detector 82 in this case judges "YES" in step S337 of FIG. 26, proceeds to step S338 of FIG. 26, and calculates the period between data numbers 1 and 2 of the communication determination data 379. In the example configuration of FIG. 27, the period between data numbers 1 and 2 is calculated as 500 (msec).

The intrusion detector 82 proceeds to step S339 of FIG. 26, and judges whether or not the calculated period satisfies none of period conditions included in the communication permission list 277. In the example configuration shown in FIG. 27, in the rule number 1 of the communication permission list 277 to which the data numbers 1 and 2 of the communication determination data 379 correspond, the period condition is set as a range between 900 (msec) and 1100 (msec). Thus, the period between the data numbers 1 and 2 does not satisfy this period condition. In this case, the intrusion detector 82 detects intrusion by judging "YES" in step S339 of FIG. 26, and proceeds to step S340 of FIG. 26.

In step S340 of FIG. 26, the intrusion detector 82 determines that the communication determination data 379 includes a "period abnormality". The intrusion detector 82 outputs, to the alert unit 83, the intrusion detection signal, the determination result, the system state, the communication rule number in the communication permission list 277 for which the communication data abnormality is determined, and the period calculated in step S338.

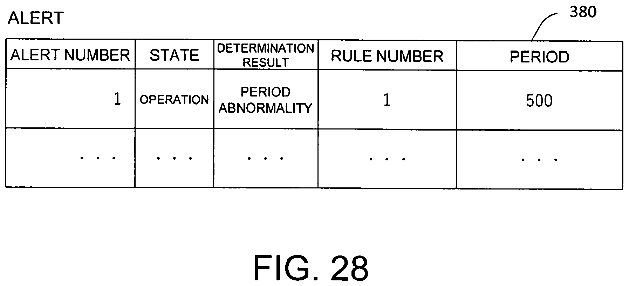

In step S336 of FIG. 26, the alert unit 83 combines the system state, the determination result, the rule number, and the communication interval which are input from the intrusion detector 82, to generate an alert 380 as shown in FIG. 28, and sends the generated alert 380 to the network 30.

On the other hand, when the intrusion detector 82 judges "NO" in both steps S337 and S339 of FIG. 26, the intrusion detector 82 judges that there is no intrusion, and completes the intrusion detection operation without sending the alert.

In the generation operation of the communication permission list 277 described above, the system state is acquired from the external device 45 which is connected to the network 30 and which sets the system state of the management system 110, the period condition is generated based on the period of the communication data flowing in the network 30, and the communication permission list 277 is generated based on the period condition. Therefore, the communication permission list 277 which is more precise can be generated in an even simpler manner than the generation operation described above with reference to FIG. 16.

Further, because intrusion is detected by comparing the communication determination data 379, in which the system state which is input from the external device 45 and the T communication data 378 are combined, to the communication permission rule in the communication permission list 277 including the period condition, the period abnormality can be determined, and the intrusion detection can be accurately executed.

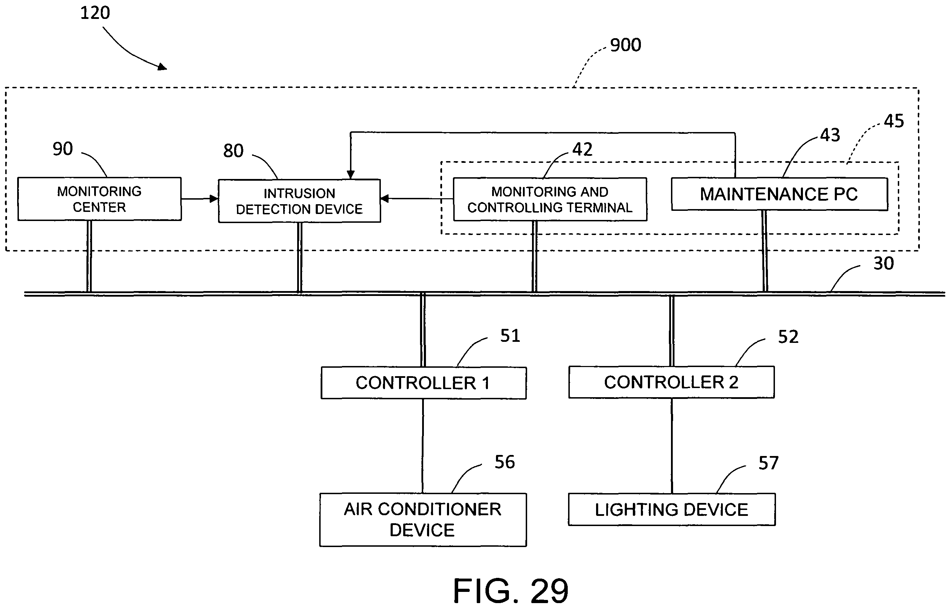

Next, an intrusion detection system 900 according to another embodiment of the present disclosure will be described with reference to FIGs. 29 to 34. Elements similar to those of the intrusion detection system 800 described above will be assigned the same reference numerals and will not be described again.

As shown in FIG. 29, the intrusion detection system 900 has a structure in which a monitoring center 90 is added to the intrusion detection system 800 described above with reference to FIGs. 14 and 15. The monitoring center 90 is connected to the network 30, analyzes the content of an alert when the alert is input from the network 30, and updates the communication permission list 277 stored in the intrusion detection device 80 based on a result of the analysis.

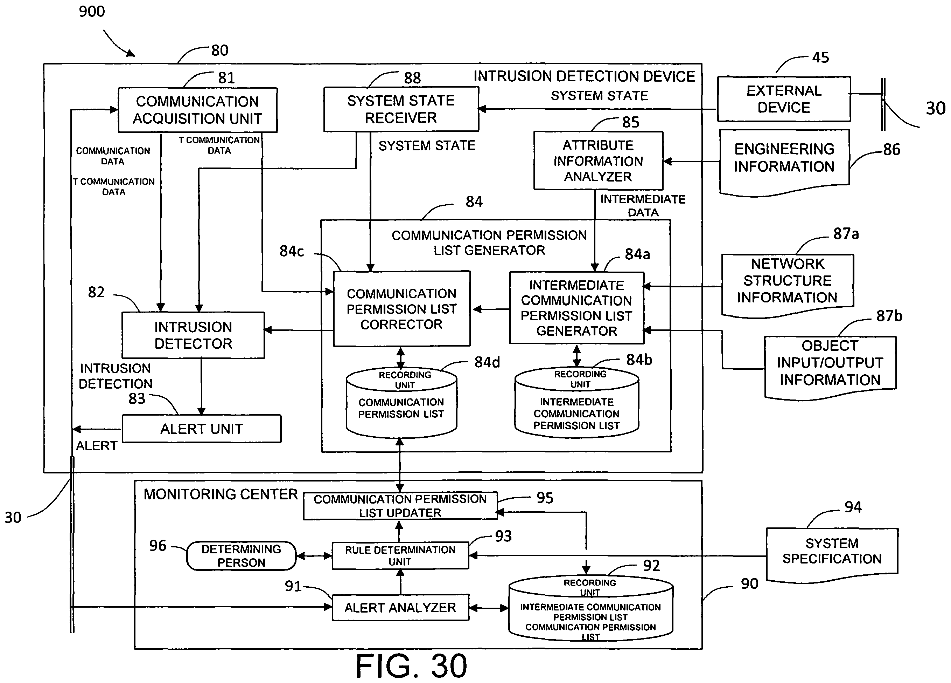

As shown in FIG. 30, the monitoring center 90 includes an alert analyzer 91, a recording unit 92, a rule determiner 93, and a communication permission list updater 95.

The recording unit 92 stores the intermediate communication permission list 176 generated by the intermediate communication permission list generator 84a and the communication permission list 277 generated by the communication permission list corrector 84c. The alert analyzer 91 analyzes the content of the alert when the alert is input from the network 30, and generates an additional communication permission rule or a changed communication permission rule according to a result of the analysis. The rule determiner 93 determines whether or not the additional communication permission rule or the changed communication permission rule generated by the alert analyzer 91 matches the system specification. When the rule determiner 93 determines that the additional communication permission rule or the changed communication permission rule matches the system specification, an update permission signal and the additional communication permission rule or the changed communication permission rule generated by the alert analyzer 91 are transmitted to the communication permission list updater 95. The communication permission list updater 95 updates the communication permission list 277 stored in the recording units 84d and 92 with the additional communication permission rule or the changed communication permission rule, to form an updated communication permission list 277a or 277b.

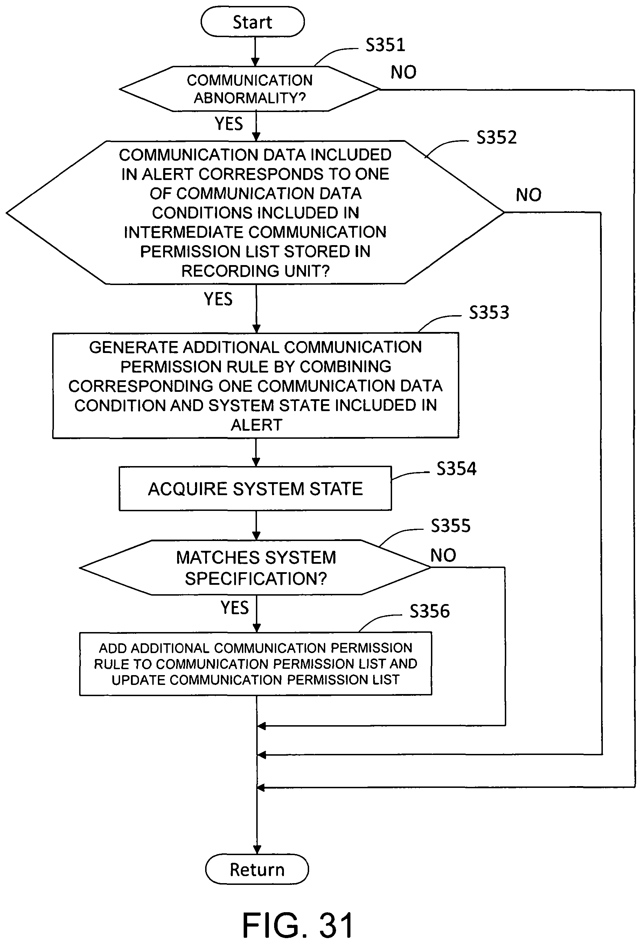

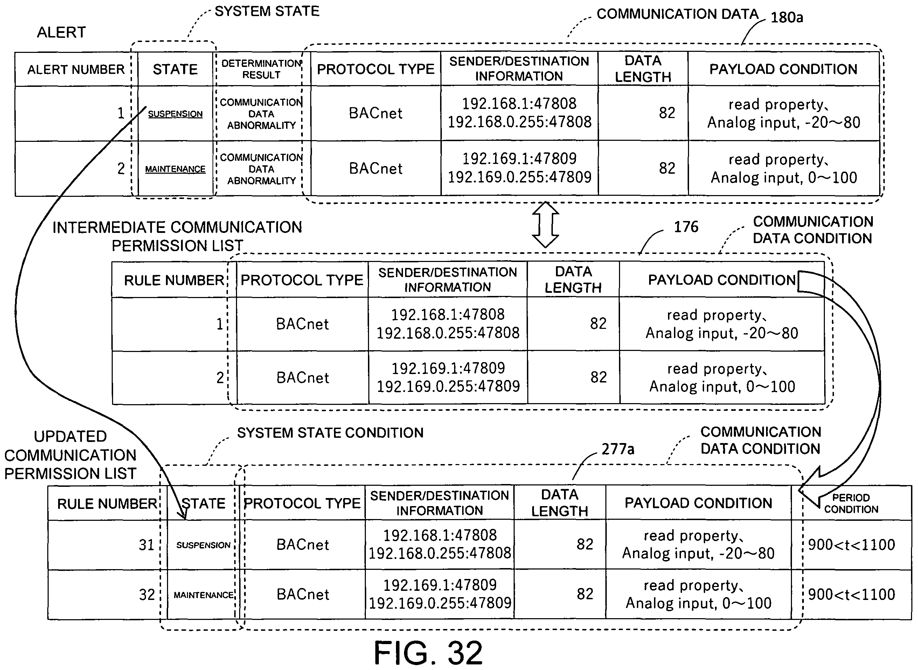

An update operation of the communication permission list 277 by the monitoring center 90 when the intrusion detector 82 determines the communication data abnormality will now be described with reference to FIGs. 31 and 32. A case will be described in which an alert 180a shown in FIG. 32 is input.

As shown in step S351 of FIG. 31, when the alert 180a shown in FIG. 32 is input from the network 30, the alert analyzer 91 of the monitoring center 90 judges whether or not the determination result included in the alert 180a indicates the communication data abnormality. If the determination result of the communication data abnormality is included in the alert, the alert analyzer 91 proceeds to step S352 of FIG. 31. When the alert analyzer 91 judges "NO" in step S351, the alert analyzer 91 completes the routine without analyzing.

In the example configuration shown in FIG. 32, the determination result included in the alert 180a is the communication data abnormality, and thus, the alert analyzer 91 judges "YES" in step S351 of FIG. 31, and proceeds to step S352 of FIG. 31.

In step S352 of FIG. 31, the alert analyzer 91 judges whether or not the communication data included in the alert 180a corresponds to any of the communication data conditions included in the intermediate communication permission list 176 stored in the recording unit 92. In the example configuration of FIG. 32, the alert numbers 1 and 2 include communication data identical to the communication data conditions of rule numbers 1 and 2 of the intermediate communication permission list 176, respectively. Therefore, in this case, the alert analyzer 91 judges "YES" in step S352 of FIG. 31, and proceeds to step S353 of FIG. 31.

In step S353 of FIG. 31, the alert analyzer 91 combines the communication data condition in the intermediate communication permission list 176 which matches the communication data included in the alert 180a, and the system state included in the alert 180a, to generate the additional communication permission rule. In the example configuration of FIG. 32, the alert analyzer 91 combines the communication data condition of the intermediate communication permission rule of the number 1 of the intermediate communication permission list 176 which matches the communication data included in the alert number 1 of the alert 180a, and the system state of "suspension" included in the alert number 1, to generate the additional communication permission rule. Because 30 communication permission rules are listed in the communication permission list 277 stored in the recording unit 92, the rule number for the generated additional communication permission rule will be 31. Similarly, the communication data condition of the intermediate communication permission rule of the number 2 in the intermediate communication permission list 176 and the system state of "maintenance" included in the alert number 2 are combined, to generate the additional communication permission rule as the rule number 32. The alert analyzer 91 then outputs the generated additional communication permission rule to the rule determiner 93.

In step S354 of FIG. 31, the rule determiner 93 acquires the system specification of a management system 120 from a system specification file 94. In step S355 of FIG. 31, the rule determiner 93 compares the additional communication permission rules of the rule numbers 31 and 32 with the system specification, and determines whether or not the additional communication permission rules match the system specification.

When the rule determiner 93 determines "YES" in step S355 of FIG. 31, the rule determiner 93 outputs a communication rule addition permission signal and the additional communication permission rules of the rule numbers 31 and 32 to the communication permission list updater 95. When the addition permission signal is input from the rule determiner 93, the communication permission list updater 95 adds the additional communication permission rule to the commination permission list 277 stored in the recording units 84d and 92, to form the updated communication permission list 277a, and stores the updated communication permission list 277a in the recording units 84d and 92.

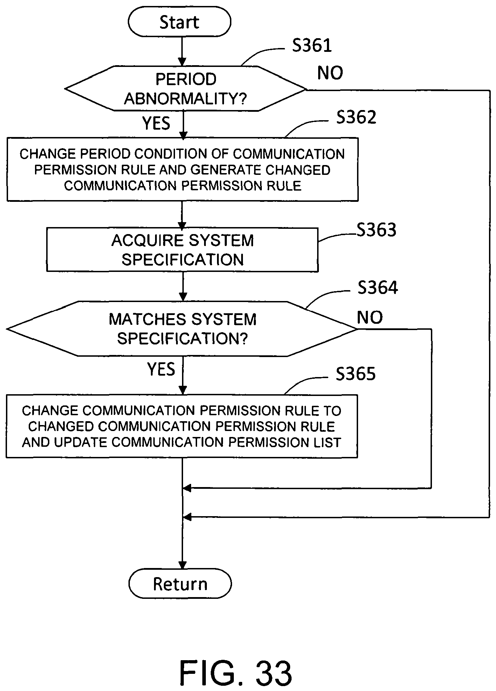

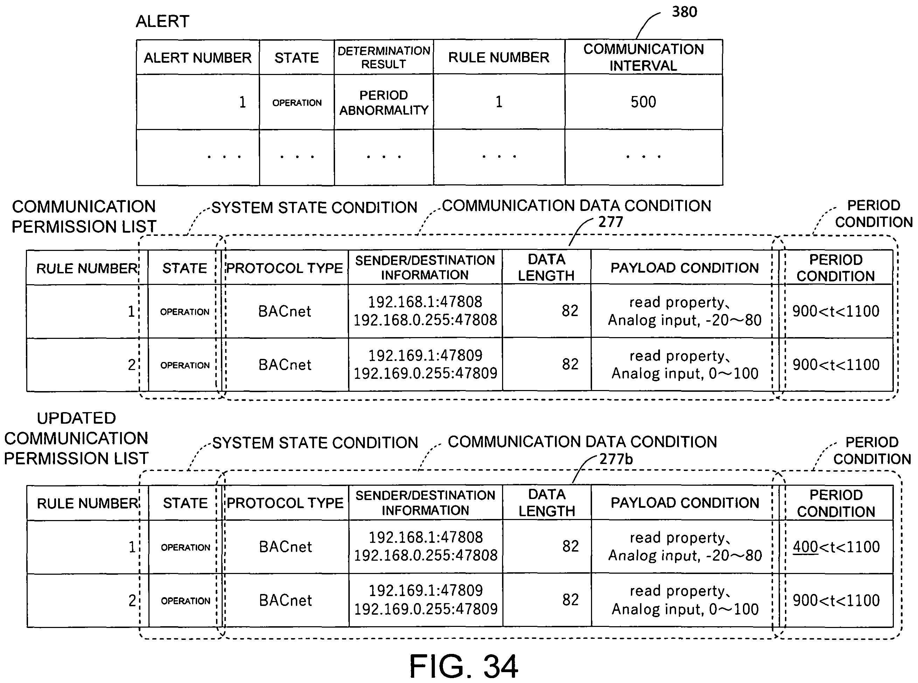

Next, an update operation of the communication permission list 277 by the monitoring center 90 when the intrusion detector 92 determines the period abnormality will be described with reference to FIGs. 33 and 34, exemplifying a case where an alert 380 shown in FIG. 34 is input.

As shown in step S361 of FIG. 33, when the alert 380 shown in FIG. 34 is input from the network 30, the alert analyzer 91 of the monitoring center 90 judges whether or not the determination result included in the alert 380 is the period abnormality. When the determination result of the period abnormality is included, the alert analyzer 91 proceeds to step S362 of FIG. 33. When the alert analyzer 91 judges "NO" in step S361, the alert analyzer 91 completes the routine without analyzing.

In the example configuration shown in FIG. 34, the determination result included in the alert 380 is the period abnormality, and thus, the alert analyzer 91 judges "YES" in step S361 of FIG. 33, and proceeds to step S362 of FIG. 33.

In step S362 of FIG. 33, the alert analyzer 91 generates a changed communication permission rule in which the period condition of the communication permission rule corresponding to the communication rule number included in the alert 380, among the communication rules in the communication permission list 277 stored in the recording unit 92, is changed to include the period included in the alert 380.

In the example configuration of FIG. 34, the communication rule number included in the alert 380 is 1, and thus, the alert analyzer 91 generates the changed communication permission rule in which the period condition is changed to 400 (msec) ∼ 1100 (msec), so that the period condition included in the rule number 1 of the communication permission list 277 includes the period included in the alert 380, which is 500 (msec). The alert analyzer 91 then outputs the generated changed communication permission rule to the rule determiner 93.

In step S363 of FIG. 33, the rule determiner 93 acquires the system specification of the management system 120 from the system specification file 94. In step S364 of FIG. 33, the rule determiner 93 compares the changed communication permission rule of the rule number 1 with the system specification, and determines whether or not the changed communication permission rule matches the system specification.

When the rule determiner 93 determines "YES" in step S364 of FIG. 36, the rule determiner 93 outputs a communication rule change permission signal and the changed communication permission rule of the rule number 1 to the communication permission list updater 95. When the change permission signal is input from the rule determiner 93, the communication permission list updater 95 changes the communication permission rule of the rule number 1 of the communication permission list 277 stored in the recording units 84d and 92 to the changed communication permission rule, to form the updated communication permission list 277b, and stores the updated communication permission list 277b in the recording units 84d and 92.

In the example configuration shown in FIG. 34, the alert 380 corresponds to a case where a period which is shorter than the period condition included in the communication permission list 277 is detected, but alternatively, the alert 380 may correspond to a case where a period which is longer than the period condition included in the communication permission list 277 is detected or a case where the process is timed out and the period was not detected. In these cases, the alert analyzer 91 may increase the upper limit of the period condition defined in the communication permission rule in the communication permission list 277 corresponding to the communication rule number of the alert 380. For example, in the example configuration shown in FIG. 34, the upper limit of the period condition may be changed from 1100 (msec) to 1200 (msec) or to 1500 (msec).

Further, in the above description, the rule determiner 93 is described as determining whether or not the additional communication permission rule or the changed communication permission rule matches the system specification. Alternatively, a configuration may be employed in which a determining person 96 such as an administrator of the management system located in the monitoring center 90 judges whether or not the additional communication permission rule or the changed communication permission rule matches the system specification, and causes the rule determiner 93 to send the addition permission signal or the change permission signal for the communication permission rule.

As described, the intrusion detection system 900 of the present embodiment analyzes the content of the alert which is input from the network 30, and updates the communication permission list 277 stored in the intrusion detection device 80 based on the analysis result. Therefore, the communication permission list can be generated in a shorter period of time.

In addition, because the communication permission list 277 is updated only when the rule determiner 93 determines that the additional communication permission rule or the changed communication permission rule matches the system specification, it is possible to prevent inclusion, in the updated communication permission list 277b, of a communication permission rule which does not match the system specification, and to generate an accurate updated communication permission list 277b.

The present disclosure is not limited to the embodiments described above, and includes all changes and modifications which fall within the scope of the invention as defined in the claims.

### REFERENCE SIGNS LIST

10, 20, 80 INTRUSION DETECTION DEVICE; 11, 21, 81 COMMUNICATION ACQUISITION UNIT; 12, 22, 82 INTRUSION DETECTOR; 13, 23, 83 ALERT UNIT; 14, 24, 84 COMMUNICATION PERMISSION LIST GENERATOR; 15, 25, 85 ATTRIBUTE INFORMATION ANALYZER; 16, 86 ENGINEERING INFORMATION FILE; 17 MANAGEMENT INFORMATION FILE; 18 SENDER/DESTINATION INFORMATION CONVERSION TABLE; 19 COMMAND CONDITION CONVERSION TABLE; 27 COMMUNICATION RULE LIST GENERATOR; 28 COMMUNICATION RULE LIST VERIFIER; 29 COMMUNICATION PERMISSION LIST STORAGE; 30 NETWORK; 40, 42 MONITORING AND CONTROLLING TERMINAL; 43 MAINTENANCE PC; 45 ETERNAL DEVICE; 51, 52 CONTROLLER; 56 AIR CONDITIONER DEVICE; 57 LIGHTING DEVICE; 60 COMPUTER; 61 CPU; 62 AUXILIARY RECORDING DEVICE; 63 MEMORY; 64 COMMUNICATION DEVICE; 64a RECEIVER; 64b TRANSMITTER; 65 INPUT INTERFACE; 66 INPUT DEVICE; 67 OUTPUT INTERFACE; 68 DISPLAY; 69 DATA BUS; 71 ENGINEERING DATA; 72, 175 INTERMEDIATE DATA; 73, 177, 277 COMMUNICATION PERMISSION LIST; 74 COMMUNICATION RULE LIST; 84a INTERMEDIATE COMMUNICATION PERMISSION LIST GENERATOR; 84b, 84d, 92 RECORDING UNIT; 84c COMMUNICATION PERMISSION LIST CORRECTOR; 87a NETWORK STRUCTURE INFORMATION FILE; 87b OBJECT INPUT/OUTPUT INFORMATION FILE; 88 SYSTEM STATE RECEIVER; 90 MONITORING CENTER; 91 ALERT ANALYZER; 93 RULE DETERMINER; 94 SYSTEM SPECIFICATION FILE; 95 COMMUNICATION PERMISSION LIST UPDATER; 96 DETERMINING PERSON; 100 BUILDING MANAGEMENT SYSTEM; 110, 120 MANAGEMENT SYSTEM; 176 INTERMEDIATE COMMUNICATION PERMISSION LIST; 179, 379 COMMUNICATION DETERMINATION DATA; 180, 180a, 380 ALERT; 277a, 277b UPDATED COMMUNICATION PERMISSION LIST; 278, 378 T COMMUNICATION DATA (TIME-STAMPED COMMUNICATION DATA); 800, 900 INTRUSION DETECTION SYSTEM.

## Claims

1. An intrusion detection device (10, 20, 80) configured to detect intrusion into a network (30) which is a part of a management system (100) of a building facility, comprising:
a communication acquisition unit (11, 21, 81) configured to acquire communication data related to the building facility and flowing in the network (30);
a communication permission list generator (14, 24, 84) configured to generate a communication permission rule for permitting communication in the network (30) and configured to store the same in a communication permission list;
an intrusion detector (12, 22, 82) configured to detect intrusion into the network by comparing communication determination data including the communication data acquired by the communication acquisition unit and the communication permission rule in the communication permission list, wherein the communication determination data is a data set in which a system state of the management system (100) and a period of the communication data are added to the communication data; and
an attribute information analyzer (15, 25, 85) configured to analyze engineering information including attribute information of an object of the building facility and to extract information necessary for generating the communication permission rule, configured to formulate the information into a communication specification format of the network (30), and configured to output the result as intermediate data, wherein
the communication acquisition unit (11, 21, 81) is configured to generate the communication determination data based on the acquired communication data, and is configured to output the same to the intrusion detector (12, 22, 82),
the intrusion detector (12, 22, 82) is configured to detect intrusion into the network when the communication determination data does not correspond to any of the communication permission rules in the communication permission list, and
the communication permission list generator (14, 24, 84) is configured to generate the communication permission rule by combining, with the intermediate data, management information including network structure information and object input/output information.

2. The intrusion detection device (10, 20, 80) according to claim 1, wherein
the attribute information analyser (15, 25, 85) is configured to receive the engineering information from outside the intrusion detection device; and
the communication permission list generator (14, 24, 84) is configured to receive the management information from outside the intrusion detection device.

3. The intrusion detection device (20) according to any one of claim 1 or 2, further comprising:
a communication rule list generator (27) configured to learn the communication determination data generated by the communication acquisition unit (21), that is configured to generate a communication rule from the communication data related to the building facility and flowing in the network (30), and that is configured to output a communication rule list;
a communication permission list storage (29) configured to store a corrected communication permission list; and
a communication rule list verifier (28) configured to correct, when one of communication rules in the communication rule list only partially differs from any of the communication permission rules in the communication permission list, the one communication rule according to the communication permission rule and configured to output the same in the corrected communication permission list to the communication permission list storage (29), and that is configured to output the communication rule list as the corrected communication permission list to the communication permission list storage (29) when each of the communication rules in the communication rule list matches any of the communication permission rules in the communication permission list, wherein
the intrusion detector (22) is configured to detect intrusion into the network when the communication determination data generated by the communication acquisition unit does not correspond to any of the communication permission rules in the corrected communication permission list stored in the communication permission list storage (29).

4. The intrusion detection device (20) according to claim 3, wherein
the communication rule list verifier (28) is configured to delete, when one of the communication rules in the communication rule list differs from any of the communication permission rules in the communication permission list and the one communication rule cannot be corrected according to the communication permission rule, the one communication rule from the communication rule list, and is configured to output the corrected communication permission list to the communication permission list storage (29).

5. The intrusion detection device (20) according to claim 3 or 4, wherein
the communication rule list verifier (28) is configured to add, when there is a communication permission rule, among the communication permission rules related to the object included in the communication permission list, which is not included in the communication rule related to the object in the communication rule list, the communication permission rule to the communication rule list, and is configured to output the result as the corrected communication permission list to the communication permission list storage (29).

6. The intrusion detection device (10, 20, 80) according to any one of claims 1 to 5, further comprising:
an alert unit (13, 23, 83) configured to output, to the network (30), an alert indicating detection of intrusion into the network (30) when the intrusion detector (12, 22, 82) detects intrusion into the network (30).

7. An intrusion detection method of detecting intrusion into a network which is a part of a management system of a building facility, the method comprising:
a communication data acquisition step of acquiring communication data related to the building facility and flowing in the network;
a communication permission list generation step of generating a communication permission rule for permitting communication in the network based on engineering information including attribute information of an object of the building facility, and of outputting the same in a communication permission list;
an intrusion detection step of detecting intrusion into the network by comparing communication determination data including the acquired communication data and the communication permission rule in the communication permission list, wherein the communication determination data is a data set in which a system state of the management system and a period of the communication data are added to the communication data;
an attribute information analysis step of analyzing the engineering information to extract information necessary for generating the communication permission rule, of formulating the information into a communication specification format of the network, and of outputting as intermediate data; and
a determination data generation step of generating the communication determination data based on the acquired communication data, wherein
in the intrusion detection step, intrusion into the network is detected when the communication determination data does not correspond to any of the communication permission rules in the communication permission list, and
in the communication permission list generation step, the communication permission rule is generated by combining, to the intermediate data, management information including network structure information and input/output information.

8. The intrusion detection method according to claim 7, further comprising:
a communication rule list generation step of learning the communication determination data to generate a communication rule from the communication data related to the building facility and flowing in the network, and of outputting as a communication rule list; and
a communication rule list verification step of correcting, when one of communication rules in the communication rule list only partially differs from any of the communication permission rules in the communication permission list, the one communication rule according to the communication permission rule, to form a corrected communication permission list, and of setting the communication rule list as the corrected communication permission list when each of the communication rules in the communication rule list matches any of the communication permission rules in the communication permission list, wherein
in the intrusion detection step, intrusion into the network is detected when the communication determination data does not correspond to any of the communication permission rules in the corrected communication permission list.

9. The intrusion detection method according to claim 8, wherein
in the communication rule list verification step, when one of the communication rules in the communication rule list differs from any of the communication permission rules in the communication permission list and the one communication rule cannot be corrected according to the communication permission rule, the one communication rule is deleted from the communication rule list, to form the corrected communication permission list.

10. The intrusion detection method according to claim 8 or 9, wherein
in the communication rule list verification step, when there is a communication permission rule, among the communication permission rules related to the object included in the communication permission list, which is not included in the communication rule related to the object in the communication rule list, the communication permission rule is added to the communication rule list, to form the corrected communication permission list.

11. An intrusion detection system (800) configured to detect intrusion into a network (30) which is a part of a management system (110) of a building facility, the intrusion detection system (800) comprising:
an external device (45) configured to set a system state of the management
system (110); and
an intrusion detection device (80)configured to detect intrusion into the
network (30), wherein the intrusion detection device (80) comprises:
a system state receiver (88) configured to receive the system state of the management system (110) from the external device (45);
a communication acquisition unit (81) configured to acquire communication data related to the building facility and flowing in the network (30);
a communication permission list generator (84) configured to generate a communication permission rule which defines a combination of a communication data condition for permitting communication and a system state condition based on engineering information including attribute information of an object of the building facility and the system state which is input from the system state receiver (88), and which is configured to store the same in a communication permission list;
an intrusion detector (82) configured to generate communication determination data by combining the communication data which is input from the communication acquisition unit (81) and the system state which is input from the system state receiver (88), wherein the communication determination data is a data set in which a system state of the management system (100) and a period of the communication data are added to the communication data, and which is configured to detect intrusion into the network (30) by comparing the generated communication determination data and the communication permission rule in the communication permission list;
an alert unit (83) configured to send an alert to the network (30) when the intrusion detector (82) detects intrusion; and
an attribute information analyzer (85) configured to analyze the engineering information to extract information necessary for generating the communication permission rule, wherein
the communication permission list generator (84) comprises:
an intermediate communication permission list generator (84a) configured to generate an intermediate communication permission rule which defines the communication data condition based on the information extracted by the attribute information analyzer (85), network structure information, and object input/output information, and which is configured to store the same in an intermediate communication permission list; and
a communication permission list corrector (84c) configured to add, to the intermediate communication permission rule, the system state condition, to be combined with the communication data condition of the intermediate communication permission rule based on the system state which is input from the system state receiver (88), to generate the communication permission rule, and which is configured to store as the communication permission list, and
the intrusion detector (82) is configured to detect intrusion into the network (30) when a combination of the communication data and the system state included in the communication determination data does not correspond to any of combinations of the communication data conditions and the system state conditions included in the communication permission rule.

12. The intrusion detection system (800) according to claim 11, further comprising:
a monitoring center that is connected to the network (30), that is configured to analyze content of the alert when the alert is input from the network (30), and that is configured to update the communication permission list stored in the intrusion detection device based on a result of the analysis.

13. The intrusion detection system (800) according to claim 11, wherein
the alert unit is configured to send to the network (30) an alert including a determination result of communication data abnormality, and the system state and the communication data in the communication determination data, when the intrusion detector detects intrusion into the network (30).

14. The intrusion detection system (900) according to claim 13, further comprising:
a monitoring center (90) including:
an alert analyzer (91) configured to analyze content of the alert when the alert is input from the network (30) and which is configured to generate an additional communication permission rule based on a result of the analysis;
a recording unit (92) which is configured to store the intermediate communication permission list generated by the intermediate communication permission list generator (84a) and the communication permission list generated by the communication permission list generator (84); and
a communication permission list updater (95) configured to update the communication permission list stored in the recording unit (92) and in the intrusion detection device (80), wherein
the alert analyzer (91) is configured to combine, when the communication data included in the alert corresponds to any of the communication data conditions included in the intermediate communication permission list stored in the recording unit (92), the corresponding communication data condition and the system state included in the alert, to generate the additional communication permission rule, and
the communication permission list updater (95) is configured to update the communication permission list stored in the recording unit (92) by adding the additional communication permission rule generated by the alert analyzer (91) to the communication permission list stored in the recording unit (92) and in the intrusion detection device (80).

15. The intrusion detection system (800) according to claim 14, wherein
the monitoring center (90) further comprises:
a rule determiner (93) configured to compare the additional communication permission rule generated by the alert analyzer (91) and a system specification, to determine whether or not the additional communication permission rule matches the system specification, and
the communication permission list updater (95) is configured to execute update of the communication permission list when the rule determiner (93) determines that the additional communication permission rule matches the system specification.

16. The intrusion detection system (800) according to claim 11, wherein
the communication acquisition unit (81) is configured to add a time stamp indicating an acquisition time to the acquired communication data, and is configured to output the same as time-stamped communication data to the intrusion detector (82) and to the communication permission list corrector (84c),
the communication permission list corrector (84c):
is configured to generate, when there are a plurality of cases where the communication data included in the time-stamped communication data which is input from the communication acquisition unit (81) corresponds to one of the communication data conditions included in the intermediate communication permission rule, a period condition corresponding to the one communication data condition based on the time stamp; and
is configured to add, to the intermediate communication permission rule, the period condition and the system state condition, to be combined with the communication data condition of the intermediate communication permission rule based on the system state which is input from the system state receiver (88), to generate the communication permission rule, and is configured to store the same in the communication permission list, and
the intrusion detector (82):
is configured to generate the communication determination data by combining the time-stamped communication data which is input from the communication acquisition unit (81) and the system state which is input from the system state receiver (88);
is configured to calculate, when there are a plurality of cases where a combination of the communication data and the system state included in the communication determination data corresponds to a combination of one of the communication data conditions and one of the system state conditions included in the communication permission rule, a period of flow in the network (30) of a combination of the communication data and the system state corresponding to a combination of the one communication data condition and the one system state condition based on the time stamp included in the communication determination data; and
is configured to detect intrusion into the network (30) when the calculated period does not satisfy the period condition included in the communication permission rule.

17. The intrusion detection system (800) according to claim 16, wherein
the alert unit (83) is configured to send to the network (30) an alert including a determination result of period abnormality, the system state in the communication determination data, a communication rule number including the combination of the one communication data condition and the one system state condition, and the calculated period, when intrusion into the network (30) is detected.

18. The intrusion detection system (900) according to claim 17, further comprising:
a monitoring center (90) including:
an alert analyzer (91) configured to analyze content of the alert when the alert is
input from the network (30) and configured to generate a changed communication permission rule by changing the communication permission rule included in the communication permission list based on a result of the analysis;
a recording unit (92) configured to store the communication permission list generated by the communication permission list generator (84a); and
a communication permission list updater (95) configured to update the communication permission list stored in the recording unit (92) and in the intrusion detection device (80), wherein
the alert analyzer (91) is configured to generate the changed communication permission rule in which the period condition of the communication permission rule corresponding to the communication rule number included in the alert in the communication permission list stored in the recording unit (92) is changed to include the period included in the alert, and
the communication permission list updater (95) is configured to update the communication permission list stored in the recording unit (92) and in the intrusion detection device (80) by changing the communication permission rule of the communication rule number in the communication permission list stored in the recording unit (92) and in the intrusion detection device (80) to the changed communication permission rule.

19. The intrusion detection system (800) according to claim 18, wherein
the monitoring center (90) further comprises:
a rule determiner (93) configured to compare the changed communication permission rule generated by the alert analyzer (91) and a system specification, and configured to determine whether or not the changed communication permission rule matches the system specification, and
the communication permission list updater (95) is configured to execute update of the communication permission list when the rule determiner determines that the changed communication permission rule matches the system specification.

## Patentansprüche

1. Angriffsdetektionsvorrichtung (10, 20, 80), die konfiguriert ist, um Angriffe auf ein Netzwerk (30) zu detektieren, das Teil eines Verwaltungssystems (100) einer Gebäudeanlage ist, umfassend:
eine Kommunikationserfassungseinheit (11, 21, 81), die konfiguriert ist, um Kommunikationsdaten zu erfassen, die sich auf die Gebäudeanlage beziehen und in dem Netzwerk (30) fließen;
einen Kommunikationserlaubnislistengenerator (14, 24, 84), der konfiguriert ist, eine Kommunikationserlaubnisregel zum Erlauben von Kommunikation in dem Netzwerk (30) zu erzeugen und konfiguriert ist, diese in einer Kommunikationserlaubnisliste zu speichern;
einen Angriffsdetektor (12, 22, 82), der konfiguriert ist, um durch Vergleich von Kommunikationsbestimmungsdaten, die die durch die Kommunikationserfassungseinheit erfassten Kommunikationsdaten und die Kommunikationserlaubnisregel in der Kommunikationserlaubnisliste umfassen, Angriffe auf das Netzwerk zu detektieren, wobei die Kommunikationsbestimmungsdaten ein Datensatz sind, in dem ein Systemstatus des Verwaltungssystems (100) und eine Periode der Kommunikationsdaten den Kommunikationsdaten hinzugefügt werden; und
einen Attributinformationsanalysator (15, 25, 85), der konfiguriert ist, um technische Informationen, die Attributinformationen eines Objekts der Gebäudeanlage umfassen, zu analysieren, und Informationen zu extrahieren, die erforderlich sind, um die Kommunikationserlaubnisregel zu erzeugen, der konfiguriert ist, um die Informationen in ein Kommunikationsspezifikationsformat des Netzwerks (30) zu formulieren, und der konfiguriert ist, um das Ergebnis als Zwischendaten auszugeben, wobei
die Kommunikationserfassungseinheit (11, 21, 81) konfiguriert ist, um die Kommunikationsbestimmungsdaten auf der Grundlage der erfassten Kommunikationsdaten zu erzeugen, und die konfiguriert ist, um diese an den Angriffsdetektor (12, 22, 82) auszugeben,
der Angriffsdetektor (12, 22, 82) konfiguriert ist, um einen Angriff auf das Netzwerk zu detektieren, wenn die Kommunikationsbestimmungsdaten nicht einer der Kommunikationserlaubnisregeln in der Kommunikationserlaubnisliste entsprechen, und
der Kommunikationserlaubnislistengenerator (14, 24, 84) konfiguriert ist, um die Kommunikationserlaubnisregel durch Kombinieren von Verwaltungsinformationen, die Netzwerksstrukturinformationen und Objekt-Eingabe/Ausgabe-Informationen umfassen, mit den Zwischendaten zu erzeugen.

2. Angriffsdetektionsvorrichtung (10, 20, 80) nach Anspruch 1, wobei
der Attributinformationsanalysator (15, 25, 85) konfiguriert ist, um die technischen Informationen von außerhalb der Angriffsdetektionsvorrichtung zu empfangen; und
der Kommunikationserlaubnislistengenerator (14, 24, 84) konfiguriert ist, um die Verwaltungsinformationen von außerhalb der Angriffsdetektionsvorrichtung zu empfangen.

3. Angriffsdetektionsvorrichtung (20) nach einem der Ansprüche 1 oder 2, ferner umfassend:
einen Kommunikationsregellistengenerator (27), der konfiguriert ist, um die Kommunikationsbestimmungsdaten zu lernen, die durch die Kommunikationserfassungseinheit (21) erzeugt wurden, die konfiguriert ist, um eine Kommunikationsregel von den Kommunikationsdaten, die sich auf die die Gebäudeanlage beziehen und in dem Netzwerk (30) fließen, zu erzeugen, und die konfiguriert ist, um eine Kommunikationsregelliste auszugeben;
einen Kommunikationserlaubnislistenspeicher (29), der konfiguriert ist, um eine korrigierte Kommunikationserlaubnisliste zu speichern; und
eine Kommunikationsregellistenüberprüfungseinheit (28), die konfiguriert ist, um, wenn eine der Kommunikationsregeln in der Kommunikationsregelliste nur teilweise von einer der Kommunikationserlaubnisregeln in der Kommunikationserlaubnisliste abweicht, die eine Kommunikationsregel gemäß der Kommunikationserlaubnisregel zu korrigieren, und die konfiguriert ist, diese in der korrigierten Kommunikationserlaubnisliste an den Kommunikationserlaubnislistenspeicher (29) auszugeben, und die konfiguriert ist, die Kommunikationsregelliste als die korrigierte Kommunikationserlaubnisliste an den Kommunikationserlaubnislistenspeicher (29) auszugeben, wenn jede der Kommunikationsregeln in der Kommunikationsregelliste mit einer der Kommunikationserlaubnisregeln in der Kommunikationserlaubnisliste übereinstimmt, wobei
der Angriffsdetektor (22) konfiguriert ist, um einen Angriff auf das Netzwerk zu detektieren, wenn die durch die Kommunikationserfassungseinheit erzeugten Kommunikationsbestimmungsdaten nicht einer der Kommunikationserlaubnisregeln in der korrigierten Kommunikationserlaubnisliste, die in dem Kommunikationserlaubnislistenspeicher (29) gespeichert ist, entspricht.

4. Angriffsdetektionsvorrichtung (20) nach Anspruch 3, wobei
die Kommunikationsregellistenüberprüfungseinheit (28) konfiguriert ist, um bei Abweichung einer der Kommunikationsregeln in der Kommunikationsregelliste von einer der Kommunikationserlaubnisregeln in der Kommunikationserlaubnisliste und wenn die eine Kommunikationsregel nicht gemäß der Kommunikationserlaubnisregel korrigiert werden kann, die eine Kommunikationsregel aus der Kommunikationsregelliste zu löschen, und die konfiguriert ist, um die korrigierte Kommunikationserlaubnisliste an den Kommunikationserlaubnislistenspeicher (29) auszugeben.

5. Angriffsdetektionsvorrichtung (20) nach Anspruch 3 oder 4, wobei
die Kommunikationsregellistenüberprüfungseinheit (28) konfiguriert ist, um, wenn unter den Kommunikationserlaubnisregeln, die sich auf das in der Kommunikationserlaubnisliste enthaltene Objekt beziehen, eine Kommunikationserlaubnisregel besteht, die nicht in der Kommunikationsregel enthalten ist, die sich auf das Objekt in der Kommunikationsregelliste beziehen, die Kommunikationserlaubnisregel der Kommunikationsregelliste hinzuzufügen, und die konfiguriert ist, um des Ergebnis als die korrigierte Kommunikationserlaubnisliste an den Kommunikationserlaubnislistenspeicher (29) auszugeben.

6. Angriffsdetektionsvorrichtung (10, 20, 80) nach einem der Ansprüche 1 bis 5, ferner umfassend:
eine Alarmbenachrichtigungseinheit (13, 23, 83), die konfiguriert ist, um eine Alarmbenachrichtigung an das Netzwerk (30) auszugeben, die die Detektion von Angriffen auf das Netzwerk (30) anzeigt, wenn der Angriffsdetektor (12, 22, 82) einen Angriff auf das Netzwerk (30) detektiert.

7. Angriffsdetektionsverfahren zum Detektieren von Angriffen auf ein Netzwerk, das Teil eines Verwaltungssystems einer Gebäudeanlage ist, wobei das Verfahren Folgendes umfasst:
einen Kommunikationsdatenerfassungsschritt des Erfassens von Kommunikationsdaten, die sich auf die Gebäudeanlage beziehen und in dem Netzwerk fließen;
einen Kommunikationserlaubnislistenerzeugungsschritt des Erzeugens einer Kommunikationserlaubnisregel zum Erlauben der Kommunikation in dem Netzwerk auf der Grundlage von technischen Informationen, die Attributinformationen eines Objekts der Gebäudeanlage umfassen, und des Ausgebens dieser in einer Kommunikationserlaubnisliste;
einen Angriffsdetektionsschritt zum Detektieren von Angriffen auf das Netzwerk durch Vergleichen von Kommunikationsbestimmungsdaten, die die erfassten Kommunikationsdaten und die Kommunikationserlaubnisregel in der Kommunikationserlaubnisliste umfassen, wobei die Kommunikationsbestimmungsdaten ein Datensatz sind, in dem ein Systemstatus des Verwaltungssystems und eine Periode der Kommunikationsdaten den Kommunikationsdaten hinzugefügt werden;
einen Attributinformationenanalyseschritt des Analysierens der technischen Informationen, um Informationen zu extrahieren, die erforderlich sind, um die Kommunikationserlaubnisregel zu erzeugen, des Formulierens der Informationen in ein Kommunikationsspezifikationsformat des Netzwerks, und des Ausgebens als Zwischendaten; und
einen Bestimmungsdatenerzeugungsschritt des Erzeugens der Kommunikationsbestimmungsdaten auf der Grundlage der erfassten Kommunikationsdaten, wobei
in dem Angriffsdetektionsschritt ein Angriff auf das Netzwerk detektiert wird, wenn die Kommunikationsbestimmungsdaten nicht einer der Kommunikationserlaubnisregeln in der Kommunikationserlaubnisliste entsprechen, und
in dem Kommunikationserlaubnislistenerzeugungsschritt die Kommunikationserlaubnisregel durch Kombinieren von Verwaltungsinformationen, die Netzwerkstrukturinformationen und Eingabe/Ausgabe-Informationen umfassen, mit den Zwischendaten erzeugt wird.

8. Angriffsdetektionsverfahren nach Anspruch 7, ferner umfassend:
einen Kommunikationsregellistenerzeugungsschritt des Lernens von Kommunikationsbestimmungsdaten zum Erzeugen einer Kommunikationsregel aus den Kommunikationsdaten, die sich auf die Gebäudeanlage beziehen und in dem Netzwerk fließen, und des Ausgebens einer Kommunikationsregelliste; und
einen Kommunikationsregellistenüberprüfungsschritt, wenn eine der Kommunikationsregeln in der Kommunikationsregelliste nur teilweise von einer der Kommunikationsregellisten in der Kommunikationserlaubnisliste abweicht, des Korrigierens der einen Kommunikationsregel gemäß der Kommunikationserlaubnisregel, um eine korrigierte Kommunikationserlaubnisliste zu bilden, und des Einstellens der Kommunikationsregelliste als die korrigierte Kommunikationserlaubnisliste, wenn jede der Kommunikationsregeln in der Kommunikationsregelliste mit einer der Kommunikationserlaubnisregeln in der Kommunikationserlaubnisliste übereinstimmt, wobei
in dem Angriffsdetektionsschritt ein Angriff auf das Netzwerk detektiert wird, wenn die Kommunikationsbestimmungsdaten nicht einer der Kommunikationserlaubnisregeln in der korrigierten Kommunikationserlaubnisliste entsprechen.

9. Angriffsdetektionsverfahren nach Anspruch 8, wobei
in dem Kommunikationsregellistenüberprüfungsschritt, wenn eine der Kommunikationsregeln in der Kommunikationsregelliste von einer der Kommunikationserlaubnisregeln in der Kommunikationserlaubnisliste abweicht und die eine Kommunikationsregel nicht gemäß der Kommunikationserlaubnisregel korrigiert werden kann, die eine Kommunikationsregel aus der Kommunikationsregelliste gelöscht wird, um die korrigierte Kommunikationserlaubnisliste zu bilden.

10. Angriffsdetektionsverfahren nach Anspruch 8 oder 9, wobei
in dem Kommunikationsregellistenüberprüfungsschritt, wenn unter den Kommunikationserlaubnisregeln, die sich auf das in der Kommunikationserlaubnisliste enthaltene Objekt beziehen, eine Kommunikationserlaubnisregel besteht, die nicht in der auf das Objekt in der Kommunikationsregelliste bezogenen Kommunikationsregel enthalten ist, die Kommunikationserlaubnisregel zu der Kommunikationsregelliste hinzugefügt wird, um die korrigierte Kommunikationserlaubnisliste zu bilden.

11. Angriffsdetektionssystem (800), das konfiguriert ist, um Angriffe auf ein Netzwerk (30) zu detektieren, das Teil eines Verwaltungssystems (110) einer Gebäudeanlage ist, wobei das Angriffsdetektionssystem (800) Folgendes umfasst:
eine externe Vorrichtung (45), die konfiguriert ist, um einen Systemstatus des Verwaltungssystems (110) einzustellen; und
eine Angriffsdetektionsvorrichtung (80), die konfiguriert ist, um einen Angriff auf das Netzwerk (30) zu detektieren, wobei die Angriffsdetektionsvorrichtung (80) Folgendes umfasst:
einen Systemstatusempfänger (88), der konfiguriert ist, um den Systemstatus des Verwaltungssystems (110) von der externen Vorrichtung (45) zu empfangen;
eine Kommunikationserfassungseinheit (81), die konfiguriert ist, Kommunikationsdaten, die sich auf die Gebäudeanlage beziehen und in dem Netzwerk (30) fließen, zu erfassen;
einen Kommunikationserlaubnislistengenerator (84), der konfiguriert ist, um eine Kommunikationserlaubnisregel zu erzeugen, die eine Kombination einer Kommunikationsdatenbedingung zum Erlauben von Kommunikation und einer Systemstatusbedingung auf der Grundlage von technischen Informationen, die Attributinformationen eines Objekts der Gebäudeanlage umfassen, und des Systemstatus, der von dem Systemstatusempfänger (88) eingegeben wird, definiert, und die konfiguriert ist, um diese in einer Kommunikationserlaubnisliste zu speichern;
einen Angriffsdetektor (82), der konfiguriert ist, um Kommunikationsbestimmungsdaten durch Kombinieren von Kommunikationsdaten, die von der Kommunikationserfassungseinheit (81) eingegeben werden, und des Systemstatus, der von dem Systemstatusempfänger (88) eingegeben wird, zu erzeugen, wobei die Kommunikationsbestimmungsdaten ein Datensatz sind, in dem ein Systemstatus des Verwaltungssystems (100) und eine Periode der Kommunikationsdaten den Kommunikationsdaten hinzugefügt werden, und der konfiguriert sind, um Angriffe auf das Netzwerk (30) durch Vergleichen der erzeugten Kommunikationsbestimmungsdaten und der Kommunikationserlaubnisregel in der Kommunikationserlaubnisliste zu detektieren;
eine Alarmbenachrichtigungseinheit (83), die konfiguriert ist, um eine Alarmbenachrichtigung an das Netzwerk (30) zu senden, wenn der Angriffsdetektor (82) einen Angriff detektiert; und
einen Attributinformationsanalysator (85), der konfiguriert ist, um die technischen Informationen zu analysieren, um Informationen zu extrahieren, die für das Erzeugen der Kommunikationserlaubnisliste erforderlich sind, wobei
der Kommunikationserlaubnislistengenerator (84) Folgendes umfasst:
einen Zwischenkommunikationserlaubnislistengenerator (84a), der konfiguriert ist, um eine Zwischenkommunikationserlaubnisregel, die die Kommunikationsdatenbedingung auf der Grundlage der Informationen, die durch den Attributinformationsanalysator (85) extrahiert wurden, Netzwerkstrukturinformationen und Objekt-Eingabe/Ausgabe-Informationen, zu definieren, und der konfiguriert ist, um dieselben in einer Zwischenkommunikationserlaubnisliste zu speichern; und
eine Kommunikationserlaubnislistenkorrektureinheit (84c), die konfiguriert ist, um der Zwischenkommunikationserlaubnisregel die Systemstatusbedingung hinzuzufügen, womit die Kommunikationsdatenbedingung der Zwischenkommunikationserlaubnisregel auf der Grundlage des Systemstatus, der von dem Systemstatusempfänger (88) eingegeben wird, kombiniert wird, um die Kommunikationserlaubnisregel zu erzeugen, und der zum Abspeichern als Kommunikationserlaubnisliste konfiguriert ist, und
der Angriffsdetektor (82) konfiguriert ist, um Angriffe auf das Netzwerk (30) zu detektieren, wenn eine Kombination der Kommunikationsdaten und des Systemstatus, der in den Kommunikationsbestimmungsdaten enthalten ist, nicht einer der Kombinationen der Kommunikationsdatenbedingungen und der Systemstatusbedingungen, die in der Kommunikationserlaubnisregel enthalten sind, entspricht.

12. Angriffsdetektionssystem (800) nach Anspruch 11, ferner umfassend:
ein Überwachungszentrum, das mit dem Netzwerk (30) verbunden ist und konfiguriert ist, um Inhalte der Alarmbenachrichtigung zu analysieren, wenn die Alarmbenachrichtigung von dem Netzwerk (30) eingegeben wird, und das konfiguriert ist, die Kommunikationserlaubnisliste, die in der Angriffsdetektionsvorrichtung gespeichert ist, auf der Grundlage eines Ergebnisses der Analyse zu aktualisieren.

13. Angriffsdetektionssystem (800) nach Anspruch 11, wobei
die Alarmbenachrichtigungseinheit konfiguriert ist, um eine Alarmbenachrichtigung, die das Bestimmungsergebnis von Kommunikationsdatenabnormalität, den Systemstatus und die Kommunikationsdaten in den Kommunikationsbestimmungsdaten, umfasst, an das Netzwerk (30) zu senden, wenn der Angriffsdetektor einen Angriff auf das Netzwerk (30) detektiert.

14. Angriffsdetektionssystem (900) nach Anspruch 13, ferner umfassend:
ein Überwachungszentrum (90), umfassend:
einen Alarmbenachrichtigungsanalysator (91), der konfiguriert ist, um Inhalte der Alarmbenachrichtigung zu analysieren, wenn die Alarmbenachrichtigung von dem Netzwerk (30) eingegeben wurde, und der konfiguriert ist, um eine zusätzliche Kommunikationserlaubnisregel auf der Grundlage eines Ergebnisses der Analyse zu erzeugen;
eine Aufnahmeeinheit (92), die konfiguriert ist, um die Zwischenkommunikationserlaubnisliste, die durch den Zwischenkommunikationserlaubnislistengenerator (84a) erzeugt wurde, und die Kommunikationserlaubnisliste, die durch den Kommunikationserlaubnislistengenerator (84) erzeugt wurde, zu speichern; und
eine Kommunikationserlaubnislistenaktualisierungseinheit (95), die konfiguriert ist, um die Kommunikationserlaubnisliste, die in der Aufnahmeeinheit (92) und in der Angriffsdetektionsvorrichtung (80) gespeichert ist, zu aktualisieren, wobei
der Alarmbenachrichtigungsanalysator (91) konfiguriert ist, um die entsprechenden Kommunikationsdatenbedingungen und den Systemstatus, der in der Alarmbenachrichtigung enthalten ist, zu kombinieren, wenn die in der Alarmbenachrichtigung enthaltenen Kommunikationsdaten einer der Kommunikationsdatenbedingungen entsprechen, die in der Zwischenkommunikationserlaubnisliste, die in der Aufnahmeeinheit (92) gespeichert ist, enthalten sind, und
die Kommunikationserlaubnislistenaktualisierungseinheit (95) konfiguriert ist, um die Kommunikationserlaubnisliste, die in der Aufnahmeeinheit (92) gespeichert ist, durch Hinzufügen der zusätzlichen Kommunikationserlaubnisregel, die durch den Alarmbenachrichtigungsanalysator (91) erzeugt wurde, zu der Kommunikationserlaubnisliste, die in der Aufnahmeeinheit (92) und in der Angriffsdetektionsvorrichtung (80) gespeichert ist, zu aktualisieren.

15. Angriffsdetektionssystem (800) nach Anspruch 14, wobei
das Überwachungszentrum (90) ferner Folgendes umfasst:
eine Regelbestimmungseinheit (93), die konfiguriert ist, um die zusätzliche Kommunikationserlaubnisregel, die durch den Alarmbenachrichtigungsanalysator (91) erzeugt wurde, und eine Systemspezifikation zu vergleichen, um zu bestimmen, ob die zusätzliche Kommunikationserlaubnisregel mit der Systemspezifikation übereinstimmt, oder nicht, und
die Kommunikationserlaubnislistenaktualisierungseinheit (95) konfiguriert ist, um das Aktualisieren der Kommunikationserlaubnisliste auszuführen, wenn die Regelbestimmungseinheit (93) bestimmt, dass die zusätzliche Kommunikationserlaubnisregel der Systemspezifikation entspricht.

16. Angriffserfassungssystem (800) nach Anspruch 11, wobei
die Kommunikationserfassungseinheit (81) konfiguriert ist, um den erfassten Kommunikationsdaten einen Zeitstempel, der eine Erfassungszeit anzeigt, hinzuzufügen, und konfiguriert ist, diese als mit einem Zeitstempel versehene Kommunikationsdaten an den Angriffsdetektor (82) und an die Kommunikationserlaubnislistenkorrektureinheit(84c) auszugeben,
die Kommunikationserlaubnislistenkorrektureinheit (84c):
konfiguriert ist, um, wenn eine Vielzahl von Fällen auftritt, wo die Kommunikationsdaten, die in den mit einem Zeitstempel versehenen Kommunikationsdaten enthalten sind, die von der Kommunikationserfassungseinheit (81) eingegeben wurden, einer der Kommunikationsdatenbedingungen entsprechen, die in der Zwischenkommunikationserlaubnisregel enthalten sind, auf der Grundlage des Zeitstempels eine Periodenbedingung zu erzeugen, die der einen Kommunikationsdatenbedingung entspricht; und
konfiguriert ist, um die Periodenbedingung und die Systemstatusbedingung der Zwischenkommunikationserlaubnisregel hinzuzufügen, um mit der Kommunikationsdatenbedingung der Zwischenkommunikationserlaubnisregel auf der Grundlage des Systemstatus, der von dem Systemstatusempfänger (88) eingegeben wird, kombiniert zu werden, um die Kommunikationserlaubnisregel zu erzeugen, und konfiguriert ist, um diese in der Kommunikationserlaubnisliste zu speichern, und
der Angriffsdetektor (82):
konfiguriert ist, um die Kommunikationsbestimmungsdaten durch Kombinieren der mit einem Zeitstempel versehenen Kommunikationsdaten, die von der Kommunikationserfassungseinheit (81) eingegeben werden, und des Systemstatus, der von dem Systemstatusempfänger (88) eingegeben wird, zu erzeugen;
konfiguriert ist, um, wenn eine Vielzahl von Fällen auftritt, wo eine Kombination der Kommunikationsdaten und des Systemstatus, der in den Kommunikationsbestimmungsdaten enthalten ist, einer Kombination einer der Kommunikationsdatenbedingungen und einer der Systemstatusbedingungen, die in der Kommunikationserlaubnisliste enthalten sind, entspricht, eine Flussperiode in dem Netzwerk (30) einer Kombination der Kommunikationsdaten und des Systemstatus, der einer Kombination der einen Kommunikationsdatenbedingung und der einen Systemstatusbedingung entspricht, auf der Grundlage des Zeitstempels, der in den Kommunikationsbestimmungsdaten enthalten ist, zu berechnen; und
konfiguriert ist, um Angriffe auf das Netzwerk (30) zu detektieren, wenn die berechnete Periode die Periodenbedingung, die in der Kommunikationserlaubnisliste enthalten ist, nicht erfüllt.

17. Angriffsdetektionssystem (800) nach Anspruch 16, wobei
die Alarmbenachrichtigungseinheit (83) konfiguriert ist, um eine Alarmbenachrichtigung an das Netzwerk (30) zu senden, die ein Bestimmungsergebnis einer Periodenabnormalität, den Systemstatus in den Kommunikationsbestimmungsdaten, eine Kommunikationsregelnummer, die die Kombination der einen Kommunikationsdatenbedingung und der einen Systemstatusbedingung umfasst, und die eine berechnete Periode enthält, wenn ein Angriff auf das Netzwerk (30) detektiert wird.

18. Angriffsdetektionssystem (900) nach Anspruch 17, ferner umfassend:
ein Überwachungszentrum (90), umfassend:
einen Alarmbenachrichtigungsanalysator (91), der konfiguriert ist, um den Inhalt der Alarmbenachrichtigung zu analysieren, wenn die Alarmbenachrichtigung von dem Netzwerk (30) eingegeben wird, und konfiguriert ist, um eine veränderte Kommunikationserlaubnisliste zu erzeugen, indem die Kommunikationserlaubnisregel, die in der Kommunikationserlaubnisliste enthalten ist, auf der Grundlage des Analyseergebnisses zu geändert wird,
eine Aufnahmeeinheit (92), die konfiguriert ist, um die Kommunikationserlaubnisliste, die durch den Kommunikationserlaubnislistengenerator (84a) erzeugt wurde, zu speichern; und
eine Kommunikationserlaubnislistenaktualisierungseinheit (95), der konfiguriert ist, um die Kommunikationserlaubnisliste, die in der Aufnahmeeinheit (92) und in der Angriffsdetektionsvorrichtung (80) gespeichert ist, zu aktualisieren, wobei
der Alarmbenachrichtigungsanalysator (91) konfiguriert ist, um die geänderte Kommunikationserlaubnisregel, in der die Periodenbedingung der Kommunikationserlaubnisregel, die der Kommunikationsregelnummer entspricht, die in der Alarmbenachrichtigung in der Kommunikationserlaubnisliste enthalten ist, die in der Aufnahmeeinheit (92) gespeichert ist, geändert wird, um die Periode die in der Alarmbenachrichtigung enthalten ist, zu umfassen, und
die Kommunikationserlaubnislistenaktualisierungseinheit (95) konfiguriert ist, um die Kommunikationserlaubnisliste, die in der Aufnahmeeinheit (92) und in der Angriffsdetektionsvorrichtung (80) gespeichert ist, durch Ändern der Kommunikationserlaubnisregel der Kommunikationsregelnummer in der Kommunikationserlaubnisliste, die in der Aufnahmeeinheit (92) und in der Angriffsdetektionsvorrichtung (80) gespeichert ist, in eine geänderte Kommunikationserlaubnisregel zu aktualisieren.

19. Angriffsdetektionssystem (800) nach Anspruch 18, wobei
das Überwachungszentrum (90) ferner Folgendes umfasst:
eine Regelbestimmungseinheit (93), die konfiguriert ist, um die geänderte Kommunikationserlaubnisregel, die durch den Alarmbenachrichtigungsanalysator (91) erzeugt wurde, und eine Systemspezifikation zu vergleichen, und konfiguriert ist, um zu bestimmen, ob die geänderte Kommunikationserlaubnisregel den Systemspezifikationen entspricht, oder nicht, und
die Kommunikationserlaubnislistenaktualisierungseinheit (95) konfiguriert ist, um das Aktualisieren der Kommunikationserlaubnisliste auszuführen, wenn die Regelbestimmungseinheit bestimmt, dass die geänderte Kommunikationserlaubnisliste mit der Systemspezifikation übereinstimmt.

## Revendications

1. Dispositif de détection d'intrusion (10, 20, 80) configuré de manière à détecter une intrusion dans un réseau (30) qui fait partie d'un système de gestion (100) d'une installation de bâtiment, comprenant :
une unité d'acquisition de communication (11, 21, 81) configurée de manière à acquérir des données de communication, connexes à l'installation de bâtiment, et circulant dans le réseau (30) ;
un générateur de liste de permission de communication (14, 24, 84) configuré de manière à générer une règle de permission de communication pour permettre une communication dans le réseau (30), et configuré de manière à stocker celle-ci dans une liste de permission de communication ;
un détecteur d'intrusion (12, 22, 82) configuré de manière à détecter une intrusion dans le réseau, en comparant des données de détermination de communication incluant les données de communication acquises par l'unité d'acquisition de communication et la règle de permission de communication figurant dans la liste de permission de communication, dans lequel les données de détermination de communication correspondent à un ensemble de données dans lequel un état de système du système de gestion (100) et une période des données de communication sont ajoutés aux données de communication ; et
un analyseur d'informations d'attributs (15, 25, 85) configuré de manière à analyser des informations d'ingénierie incluant des informations d'attributs d'un objet de l'installation de bâtiment, et à extraire des informations nécessaires à la génération de la règle de permission de communication, configuré de manière à formuler les informations dans un format de spécification de communication du réseau (30), et configuré de manière à fournir en sortie le résultat sous la forme de données intermédiaires, dans lequel :
l'unité d'acquisition de communication (11, 21, 81) est configurée de manière à générer les données de détermination de communication sur la base des données de communication acquises, et est configurée de manière à transmettre celles-ci au détecteur d'intrusion (12, 22, 82) ;
le détecteur d'intrusion (12, 22, 82) est configuré de manière à détecter une intrusion dans le réseau lorsque les données de détermination de communication ne correspondent à aucune des règles de permission de communication figurant dans la liste de permission de communication ; et
le générateur de liste de permission de communication (14, 24, 84) est configuré de manière à générer la règle de permission de communication en combinant, avec les données intermédiaires, des informations de gestion incluant des informations de structure de réseau et des informations d'entrée/sortie d'objet.

2. Dispositif de détection d'intrusion (10, 20, 80) selon la revendication 1, dans lequel :
l'analyseur d'informations d'attributs (15, 25, 85) est configuré de manière à recevoir les informations d'ingénierie en provenance de l'extérieur du dispositif de détection d'intrusion ; et
le générateur de liste de permission de communication (14, 24, 84) est configuré de manière à recevoir les informations de gestion en provenance de l'extérieur du dispositif de détection d'intrusion.

3. Dispositif de détection d'intrusion (20) selon l'une quelconque des revendications 1 à 2, comprenant en outre :
un générateur de liste de règles de communication (27) configuré de manière à apprendre les données de détermination de communication générées par l'unité d'acquisition de communication (21), lequel est configuré de manière à générer une règle de communication à partir des données de communication connexes à l'installation de bâtiment et circulant dans le réseau (30), et lequel est configuré de manière à fournir en sortie une liste de règles de communication ;
un magasin de stockage de liste de permission de communication (29) configuré de manière à stocker une liste de permission de communication corrigée ; et
un vérificateur de liste de règles de communication (28) configuré de manière à corriger, lorsque l'une parmi des règles de communication figurant dans la liste de règles de communication ne diffère que partiellement de l'une quelconque des règles de permission de communication figurant dans la liste de permission de communication, ladite une règle de communication, selon la règle de permission de communication, et configuré de manière à fournir en sortie celle-ci, dans la liste de permission de communication corrigée, au magasin de stockage de liste de permission de communication (29), et qui est configuré de manière à fournir en sortie la liste de règles de communication, sous la forme de la liste de permission de communication corrigée, au magasin de stockage de liste de permission de communication (29), lorsque chacune des règles de communication figurant dans la liste de règles de communication correspond à l'une quelconque des règles de permission de communication figurant dans la liste de permission de communication, dans lequel :
le détecteur d'intrusion (22) est configuré de manière à détecter une intrusion dans le réseau lorsque des données de détermination de communication générées par l'unité d'acquisition de communication ne correspondent à aucune des règles de permission de communication figurant dans la liste de permission de communication corrigée stockée dans le magasin de stockage de liste de permission de communication (29).

4. Dispositif de détection d'intrusion (20) selon la revendication 3, dans lequel :
le vérificateur de liste de règles de communication (28) est configuré de manière à supprimer, lorsque l'une des règles de communication figurant dans la liste de règles de communication diffère de l'une quelconque des règles de permission de communication figurant dans la liste de permission de communication, et lorsque ladite une règle de communication ne peut pas être corrigée conformément à la règle de permission de communication, ladite une règle de communication, de la liste de règles de communication, et est configuré de manière à fournir en sortie la liste de permission de communication corrigée, au magasin de stockage de liste de permission de communication (29).

5. Dispositif de détection d'intrusion (20) selon la revendication 3 ou 4, dans lequel :
le vérificateur de liste de règles de communication (28) est configuré de manière à ajouter, lorsqu'il existe une règle de permission de communication, parmi les règles de permission de communication connexes à l'objet incluses dans la liste de permission de communication, qui n'est pas incluse dans la règle de communication connexe à l'objet figurant dans la liste de règles de communication, la règle de permission de communication, à la liste de règles de communication, et est configuré de manière à fournir en sortie le résultat, sous la forme de la liste de permission de communication corrigée, au magasin de stockage de liste de permission de communication (29).

6. Dispositif de détection d'intrusion (10, 20, 80) selon l'une quelconque des revendications 1 à 5, comprenant en outre :
une unité d'alerte (13, 23, 83) configurée de manière à fournir en sortie, au réseau (30), une alerte indiquant une détection d'intrusion dans le réseau (30) lorsque le détecteur d'intrusion (12, 22, 82) détecte une intrusion dans le réseau (30).

7. Procédé de détection d'intrusion pour détecter une intrusion dans un réseau qui fait partie d'un système de gestion d'une installation de bâtiment, le procédé comprenant :
une étape d'acquisition de données de communication consistant à acquérir des données de communication, connexes à l'installation de bâtiment, et circulant dans le réseau ;
une étape de génération de liste de permission de communication consistant à générer une règle de permission de communication, pour permettre une communication dans le réseau sur la base d'informations d'ingénierie incluant des informations d'attributs d'un objet de l'installation de bâtiment, et à fournir en sortie celle-ci dans une liste de permission de communication ;
une étape de détection d'intrusion consistant à détecter une intrusion dans le réseau, en comparant des données de détermination de communication incluant les données de communication acquises, et la règle de permission de communication figurant dans la liste de permission de communication, dans lequel les données de détermination de communication correspondent à un ensemble de données dans lequel un état de système du système de gestion et une période des données de communication sont ajoutés aux données de communication ;
une étape d'analyse d'informations d'attributs consistant à analyser les informations d'ingénierie pour extraire des informations nécessaires à la génération de la règle de permission de communication, à formuler les informations dans un format de spécification de communication du réseau, et à fournir celles-ci en sortie sous la forme de données intermédiaires ; et
une étape de génération de données de détermination consistant à générer les données de détermination de communication sur la base des données de communication acquises, dans lequel :
à l'étape de détection d'intrusion, une intrusion dans le réseau est détectée lorsque les données de détermination de communication ne correspondent à aucune des règles de permission de communication figurant dans la liste de permission de communication ; et
à l'étape de génération de liste de permission de communication, la règle de permission de communication est générée en combinant, avec les données intermédiaires, des informations de gestion incluant des informations de structure de réseau et des informations d'entrée/sortie d'objet.

8. Procédé de détection d'intrusion selon la revendication 7, comprenant en outre :
une étape de génération de liste de règles de communication consistant à apprendre les données de détermination de communication en vue de générer une règle de communication à partir des données de communication, connexes à l'installation de bâtiment, et circulant dans le réseau, et à fournir en sortie celle-ci sous la forme d'une liste de règles de communication ; et
une étape de vérification de liste de règles de communication consistant à corriger, lorsque l'une parmi des règles de communication figurant dans la liste de règles de communication ne diffère que partiellement de l'une quelconque des règles de permission de communication figurant dans la liste de permission de communication, ladite une règle de communication, selon la règle de permission de communication, en vue de former une liste de permission de communication corrigée, et à définir la liste de règles de communication comme étant la liste de permission de communication corrigée, lorsque chacune des règles de communication figurant dans la liste de règles de communication correspond à l'une quelconque des règles de permission de communication figurant dans la liste de permission de communication, dans lequel :
à l'étape de détection d'intrusion, une intrusion dans le réseau est détectée lorsque les données de détermination de communication ne correspondent à aucune des règles de permission de communication figurant dans la liste de permission de communication corrigée.

9. Procédé de détection d'intrusion selon la revendication 8, dans lequel :
à l'étape de vérification de liste de règles de communication, lorsque l'une des règles de communication figurant dans la liste de règles de communication diffère de l'une quelconque des règles de permission de communication figurant dans la liste de permission de communication, et lorsque ladite une règle de communication ne peut pas être corrigée conformément à la règle de permission de communication, ladite une règle de communication est supprimée de la liste de règles de communication, en vue de former la liste de permission de communication corrigée.

10. Procédé de détection d'intrusion selon la revendication 8 ou 9, dans lequel :
à l'étape de vérification de liste de règles de communication, lorsqu'il existe une règle de permission de communication, parmi les règles de permission de communication connexes à l'objet, incluses dans la liste de permission de communication, qui n'est pas incluse dans la règle de communication connexe à l'objet figurant dans la liste de règles de communication, la règle de permission de communication est ajoutée à la liste de règles de communication, en vue de former la liste de permission de communication corrigée.

11. Système de détection d'intrusion (800) configuré de manière à détecter une intrusion dans un réseau (30) qui fait partie d'un système de gestion (110) d'une installation de bâtiment, le système de détection d'intrusion (800) comprenant :
un dispositif externe (45) configuré de manière à définir un état de système du système de gestion (110) ; et
un dispositif de détection d'intrusion (80) configuré de manière à détecter une intrusion dans le réseau (30), dans lequel le dispositif de détection d'intrusion (80) comprend :
un récepteur d'état de système (88) configuré de manière à recevoir l'état de système du système de gestion (110) en provenance du dispositif externe (45) ;
une unité d'acquisition de communication (81) configurée de manière à acquérir des données de communication, connexes à l'installation de bâtiment, et circulant dans le réseau (30) ;
un générateur de liste de permission de communication (84) configuré de manière à générer une règle de permission de communication qui définit une combinaison d'une condition de données de communication pour permettre une communication et d'une condition d'état de système, sur la base d'informations d'ingénierie incluant des informations d'attributs d'un objet de l'installation de bâtiment et l'état de système qui est appliqué en entrée à partir du récepteur d'état de système (88), et qui est configuré de manière à stocker celle-ci dans une liste de permission de communication ;
un détecteur d'intrusion (82) configuré de manière à générer des données de détermination de communication, en combinant les données de communication qui sont appliquées en entrée à partir de l'unité d'acquisition de communication (81) et l'état de système qui est appliqué en entrée à partir du récepteur d'état de système (88), dans lequel les données de détermination de communication correspondent à un ensemble de données dans lequel un état de système du système de gestion (100) et une période des données de communication sont ajoutés aux données de communication, et qui est configuré de manière à détecter une intrusion dans le réseau (30), en comparant les données de détermination de communication générées et la règle de permission de communication figurant dans la liste de permission de communication ;
une unité d'alerte (83) configurée de manière à envoyer une alerte au réseau (30) lorsque le détecteur d'intrusion (82) détecte une intrusion ; et
un analyseur d'informations d'attributs (85) configuré de manière à analyser les informations d'ingénierie en vue d'extraire des informations nécessaires à la génération de la règle de permission de communication, dans lequel :
le générateur de liste de permission de communication (84) comprend :
un générateur de liste de permission de communication intermédiaire (84a) configuré de manière à générer une règle de permission de communication intermédiaire qui définit la condition de données de communication, sur la base des informations extraites par l'analyseur d'informations d'attributs (85), d'informations de structure de réseau, et d'informations d'entrée/sortie d'objet, et qui est configuré de manière à stocker celle-ci dans une liste de permission de communication intermédiaire ; et
un correcteur de liste de permission de communication (84c) configuré de manière à ajouter, à la règle de permission de communication intermédiaire, la condition d'état de système, devant être combinée avec la condition de données de communication de la règle de permission de communication intermédiaire, sur la base de l'état de système qui est appliqué en entrée à partir du récepteur d'état de système (88), en vue de générer la règle de permission de communication, et qui est configuré de manière à stocker celle-ci sous la forme de la liste de permission de communication ; et
dans lequel le détecteur d'intrusion (82) est configuré de manière à détecter une intrusion dans le réseau (30) lorsqu'une combinaison des données de communication et de l'état de système inclus dans les données de détermination de communication ne correspond à aucune combinaison parmi des combinaisons des conditions de données de communication et des conditions d'état de système incluses dans la règle de permission de communication.

12. Système de détection d'intrusion (800) selon la revendication 11, comprenant en outre :
un centre de surveillance qui est connecté au réseau (30), qui est configuré de manière à analyser un contenu de l'alerte lorsque l'alerte est appliquée en entrée à partir du réseau (30), et qui est configuré de manière à mettre à jour la liste de permission de communication stockée dans le dispositif de détection d'intrusion sur la base d'un résultat de l'analyse.

13. Système de détection d'intrusion (800) selon la revendication 11, dans lequel :
l'unité d'alerte est configurée de manière à envoyer, au réseau (30), une alerte incluant un résultat de détermination d'anomalie de données de communication, et l'état de système et les données de communication dans les données de détermination de communication, lorsque le détecteur d'intrusion détecte une intrusion dans le réseau (30).

14. Système de détection d'intrusion (900) selon la revendication 13, comprenant en outre :
un centre de surveillance (90) incluant :
un analyseur d'alerte (91) configuré de manière à analyser un contenu de l'alerte lorsque l'alerte est appliquée en entrée à partir du réseau (30), et qui est configuré de manière à générer une règle de permission de communication supplémentaire sur la base d'un résultat de l'analyse ;
une unité d'enregistrement (92) qui est configurée de manière à stocker la liste de permission de communication intermédiaire générée par le générateur de liste de permission de communication intermédiaire (84a) et la liste de permission de communication générée par le générateur de liste de permission de communication (84) ; et
un module de mise à jour de liste de permission de communication (95) configuré de manière à mettre à jour la liste de permission de communication stockée dans l'unité d'enregistrement (92) et dans le dispositif de détection d'intrusion (80), dans lequel :
l'analyseur d'alerte (91) est configuré de manière à combiner, lorsque les données de communication incluses dans l'alerte correspondent à l'une quelconque des conditions de données de communication incluses dans la liste de permission de communication intermédiaire stockée dans l'unité d'enregistrement (92), la condition de données de communication correspondante et l'état de système inclus dans l'alerte, en vue de générer la règle de permission de communication supplémentaire ; et
le module de mise à jour de liste de permission de communication (95) est configuré de manière à mettre à jour la liste de permission de communication stockée dans l'unité d'enregistrement (92), en ajoutant la règle de permission de communication supplémentaire générée par l'analyseur d'alerte (91) à la liste de permission de communication stockée dans l'unité d'enregistrement (92) et dans le dispositif de détection d'intrusion (80) .

15. Système de détection d'intrusion (800) selon la revendication 14, dans lequel :
le centre de surveillance (90) comprend en outre :
un module de détermination de règle (93) configuré de manière à comparer la règle de permission de communication supplémentaire générée par l'analyseur d'alerte (91) et une spécification de système, en vue de déterminer si la règle de permission de communication supplémentaire correspond ou non à la spécification de système ; et
dans lequel le module de mise à jour de liste de permission de communication (95) est configuré de manière à exécuter une mise à jour de la liste de permission de communication lorsque le module de détermination de règle (93) détermine que la règle de permission de communication supplémentaire correspond à la spécification de système.

16. Système de détection d'intrusion (800) selon la revendication 11, dans lequel :
l'unité d'acquisition de communication (81) est configurée de manière à ajouter un horodatage, indiquant un instant d'acquisition, aux données de communication acquises, et est configurée de manière à fournir en sortie celles-ci sous la forme de données de communication horodatées, au détecteur d'intrusion (82), ainsi qu'au correcteur de liste de permission de communication (84c) ;
le correcteur de liste de permission de communication (84c) :
est configuré de manière à générer, lorsqu'il existe une pluralité de cas où les données de communication incluses dans les données de communication horodatées qui sont appliquées en entrée à partir de l'unité d'acquisition de communication (81) correspondent à l'une des conditions de données de communication incluses dans la règle de permission de communication intermédiaire, une condition de période correspondant à ladite condition de données de communication, sur la base de l'horodatage ; et
est configuré de manière à ajouter, à la règle de permission de communication intermédiaire, la condition de période et la condition d'état de système, devant être combinées avec la condition de données de communication de la règle de permission de communication intermédiaire, sur la base de l'état de système qui est appliqué en entrée à partir du récepteur d'état de système (88), et à générer la règle de permission de communication, et est configuré de manière à stocker celle-ci dans la liste de permission de communication ; et
le détecteur d'intrusion (82) :
est configuré de manière à générer les données de détermination de communication, en combinant les données de communication horodatées qui sont appliquées en entrée à partir de l'unité d'acquisition de communication (81) et l'état de système qui est appliqué en entrée à partir du récepteur d'état de système (88) ;
est configuré de manière à calculer, lorsqu'il existe une pluralité de cas où une combinaison des données de communication et de l'état de système inclus dans les données de détermination de communication correspond à une combinaison de l'une des conditions de données de communication et de l'une des conditions d'état de système incluses dans la règle de permission de communication, une période de circulation dans le réseau (30) d'une combinaison des données de communication et de l'état de système correspondant à une combinaison de ladite condition de données de communication et de ladite condition d'état de système sur la base de l'horodatage inclus dans les données de détermination de communication ; et
est configuré de manière à détecter une intrusion dans le réseau (30) lorsque la période calculée ne satisfait pas la condition de période incluse dans la règle de permission de communication.

17. Système de détection d'intrusion (800) selon la revendication 16, dans lequel :
l'unité d'alerte (83) est configurée de manière à envoyer, au réseau (30), une alerte incluant un résultat de détermination d'anomalie de période, l'état de système dans les données de détermination de communication, un numéro de règle de communication incluant la combinaison de ladite condition de données de communication et de ladite condition d'état de système, et la période calculée, lorsqu'une intrusion dans le réseau (30) est détectée.

18. Système de détection d'intrusion (900) selon la revendication 17, comprenant en outre :
un centre de surveillance (90) incluant :
un analyseur d'alerte (91) configuré de manière à analyser un contenu de l'alerte lorsque l'alerte est appliquée en entrée à partir du réseau (30), et configuré de manière à générer une règle de permission de communication modifiée, en modifiant la règle de permission de communication incluse dans la liste de permission de communication sur la base d'un résultat de l'analyse ;
une unité d'enregistrement (92) configurée de manière à stocker la liste de permission de communication générée par le générateur de liste de permission de communication (84a) ; et
un module de mise à jour de liste de permission de communication (95) configuré de manière à mettre à jour la liste de permission de communication stockée dans l'unité d'enregistrement (92) et dans le dispositif de détection d'intrusion (80), dans lequel :
l'analyseur d'alerte (91) est configuré de manière à générer la règle de permission de communication modifiée dans laquelle la condition de période de la règle de permission de communication correspondant au numéro de règle de communication inclus dans l'alerte dans la liste de permission de communication stockée dans l'unité d'enregistrement (92) est modifiée de façon à inclure la période incluse dans l'alerte ; et
le module de mise à jour de liste de permission de communication (95) est configuré de manière à mettre à jour la liste de permission de communication stockée dans l'unité d'enregistrement (92) et dans le dispositif de détection d'intrusion (80), en modifiant la règle de permission de communication du numéro de règle de communication dans la liste de permission de communication stockée dans l'unité d'enregistrement (92) et dans le dispositif de détection d'intrusion (80) pour la règle de permission de communication modifiée.

19. Système de détection d'intrusion (800) selon la revendication 18, dans lequel :
le centre de surveillance (90) comprend en outre :
un module de détermination de règle (93) configuré de manière à comparer la règle de permission de communication modifiée générée par l'analyseur d'alerte (91) et une spécification de système, et configuré de manière à déterminer si la règle de permission de communication modifiée correspond ou non à la spécification de système ; et
dans lequel le module de mise à jour de liste de permission de communication (95) est configuré de manière à exécuter une mise à jour de la liste de permission de communication lorsque le module de détermination de règle détermine que la règle de permission de communication modifiée correspond à la spécification de système.
